(19) **Europäisches Patentamt**
**European Patent Office**
**Office européen des brevets**

(11) **EP 2 372 403 A1**

(12) **EUROPEAN PATENT APPLICATION**
published in accordance with Art. 153(4) EPC

(43) Date of publication:
**05.10.2011 Bulletin 2011/40**

(51) Int Cl.:
**G02B 1/11** *(2006.01)* **G02F 1/1335** *(2006.01)*

(21) Application number: **09834987.1**

(22) Date of filing: **17.12.2009**

(86) International application number:
**PCT/JP2009/071521**

(87) International publication number:
**WO 2010/074191 (01.07.2010 Gazette 2010/26)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **26.12.2008 JP 2008335103**

(71) Applicant: **Sony Corporation**
**Tokyo 108-0075 (JP)**

(72) Inventors:
• **HAYASHIBE, Kazuya**
**Tokyo 108-0075 (JP)**

• **ENDOH, Sohmei**
**Tokyo 108-0075 (JP)**
• **OIKAWA, Makiko**
**Tokyo 108-0075 (JP)**
• **SHIMIZU, Koichiro**
**Tokyo 108-0075 (JP)**

(74) Representative: **Müller - Hoffmann & Partner Patentanwälte**
**Innere Wiener Strasse 17**
**81667 München (DE)**

(54) **OPTICAL ELEMENT, DISPLAY DEVICE, OPTICAL COMPONENT WITH ANTIREFLECTIVE FUNCTION, AND MASTER BOARD**

(57) An optical element includes a base and a large number of structures arranged on a surface of the base. The structures are depressions or projections with a conical form. The structures are arranged at a pitch shorter than or equal to a wavelength range of light in a use environment and lower portions of the structures adjacent to one another are connected to one another. An effective refractive index in a depth direction of the structures gradually increases toward the base and draws an S-shaped curved line.

FIG. 1A

FIG. 1B

FIG. 1C

FIG. 1D

**Description**

Technical Field

The present invention relates to an optical element, display device, an anti-reflective optical component, and a master. Specifically, the present invention relates to an optical element in which structures are arranged at a pitch shorter than or equal to a wavelength range of light in a use environment.

Background Art

Conventionally, in an optical element that uses a light-transmissive substrate composed of glass, plastic, or the like, surface treatment is performed to suppress the surface reflection of light. A method in which a minute and dense uneven structure (moth-eye structure) is formed on the surface of the optical element is exemplified as the surface treatment (e.g., refer to "Optical and Electro-Optical Engineering Contact" Vol. 43, No. 11 (2005), 630-637).

In general, in the case where a periodic uneven shape is formed on the surface of an optical element, diffraction is generated when light passes through the periodic uneven shape, which considerably reduces the amount of the light component of transmitted light that goes straight. However, when the pitch of the uneven shape is shorter than the wavelength of light transmitted, diffraction is not generated. For example, if the uneven shape is rectangular, an anti-reflection effect that is effective for light having a single wavelength corresponding to the pitch, depth, or the like can be achieved.

Since the above-described optical element has good anti-reflection characteristics, it is expected that the optical element is applied to solar cells and display devices. The following is proposed as the uneven structure in which anti-reflection characteristics are taken into account.

Minute tent-shaped uneven structures (pitch: about 300 nm, depth: about 400 nm) have been proposed as structures manufactured using electron-beam exposure (e.g., refer to NTT Advanced Technology Corporation, "Master Mold for Forming Anti-reflection (Moth-eye) Structures having no wavelength dependence", [online], [accessed Sep 1, 2008], Internet <http://keytech.ntt-at.co.jp/nano/prd_0033.html>).

Furthermore, a Super-RENS Technology Team, the Center for Applied Near-Field Optics Research of the Advanced Industrial Science and Technology has proposed nano-hole structures with a diameter of 100 nm and a depth of 500 nm or more (e.g., refer to the National Institute of Advanced Industrial Science and Technology, "Development of Desktop Device Enabling Nanometer-scale Microfabrication", [online], [accessed Sep 1, 2008], Internet <http://aist.go.jp/aist-i/press_release/pr2006/pr20060306/pr20 060306.html>). Such structures can be formed by a microstructure formation method that uses an optical disc recording apparatus. Specifically, such structures can be formed using a nanomachining device based on a thermal lithography technology in which a visible light laser lithography method using a semiconductor laser (wavelength 406 nm) is combined with a thermally nonlinear material (e.g., refer to the National Institute of Advanced Industrial Science and Technology, "Development of Desktop Device Enabling Nanometer-scale Microfabrication", [online], [accessed Sep 1, 2008], Internet <http://aist.go.jp/aist_i/press_release/pr2006/pr20060306/pr20 060306.html>).

In addition, the inventors of the present invention have proposed structures having a hanging bell shape or a truncated elliptic cone-like shape (e.g., refer to International Publication No. 08/023816 Pamphlet). In the structures, anti-reflection characteristics close to those of structures obtained by electron-beam exposure are achieved. Furthermore, the structures can be manufactured by a method in which a process for making a master of optical discs is combined with an etching process.

Disclosure of Invention

Technical Problem

In recent years, it has been demanded that the visibility of various display devices such as a liquid crystal display device is further improved. To satisfy such a demand, it is important to further improve the above-described anti-reflection characteristics of optical elements.

Accordingly, an object of the present invention is to provide an optical element having good anti-reflection characteristics, a display device, an anti-reflective optical component, and a master.

Technical Solution

To solve the problems described above, a first invention provides an anti-reflective optical element including:

a base; and
a large number of structures arranged on a surface of the base,
wherein the structures are depressions or projections with a conical form,
the structures are arranged at a pitch shorter than or equal to a wavelength range of light in a use environment and lower portions of the structures adjacent to one another are connected to one another, and
an effective refractive index in a depth direction of the structures gradually increases toward the base and draws an S-shaped curved line.

A second invention provides an optical element including:

a base; and
a large number of structures arranged on a surface of the base,
wherein the structures are pillar-shaped depressions or projections that extend in a single direction on the surface of the base,
the structures are arranged at a pitch shorter than or equal to a wavelength range of light in a use environment and lower portions of the structures adjacent to one another are connected to one another, and
an effective refractive index in a depth direction of the structures gradually increases toward the base and draws an S-shaped curved line.

A third invention provides an anti-reflective optical component including:

an optical component; and
a large number of structures arranged on a surface of the optical component,
wherein the structures are depressions or projections with a conical form,
the structures are arranged at a pitch shorter than or equal to a wavelength of light in a use environment and lower portions of the structures adjacent to one another are connected to one another, and
an effective refractive index in a depth direction of the structures gradually increases toward the base and draws an S-shaped curved line.

A fourth invention provides a master including:

a large number of structures arranged on a surface of a base,
wherein the structures are depressions or projections with a conical form,
the structures are arranged at a pitch shorter than or equal to a wavelength of light in a use environment and lower portions of the structures adjacent to one another are connected to one another, and
a change in an effective refractive index in a depth direction of an optical element shaped using the structures gradually increases toward a base of the optical element and draws an S-shaped curved line.

In the present invention, the S-shape includes an inverse S-shape, that is, a Z-shape. Furthermore, in the case where the structures are projections that protrude from the surface of the base, the lower portion of the structures refers to a portion on the base side of the structures. In the case where the structures are depressions that sink from the surface of the base, the lower portion of the structures refers to a portion on the opening side of the structures.
In the first, third, and fourth inventions, primary structures are preferably periodically arranged in a tetragonal lattice pattern or in a quasi-tetragonal lattice pattern. Herein, the tetragonal lattice means a regular tetragonal lattice. The quasi-tetragonal lattice means, unlike a regular tetragonal lattice, a distorted regular tetragonal lattice. Specifically, when the structures are arranged linearly, the quasi-tetragonal lattice is a tetragonal lattice obtained by stretching and distorting a regular tetragonal lattice in the direction of the linear arrangement. When the structures are arranged in an arc-like shape, the quasi-tetragonal lattice is a tetragonal lattice obtained by distorting a regular tetragonal lattice in an arc-like shape or a tetragonal lattice obtained by distorting a regular tetragonal lattice in an arc-like shape and stretching and distorting it in the direction of the arc-shaped arrangement.
In the first, third, and fourth inventions, the structures are preferably periodically arranged in a hexagonal lattice pattern or in a quasi-hexagonal lattice pattern. Herein, the hexagonal lattice means a regular hexagonal lattice. The quasi-hexagonal lattice means, unlike a regular hexagonal lattice, a distorted regular hexagonal lattice. Specifically, when the structures are arranged linearly, the quasi-hexagonal lattice is a hexagonal lattice obtained by stretching and distorting a regular hexagonal lattice in the direction of the linear arrangement. When the structures are arranged in an arc-like shape, the quasi-hexagonal lattice is a hexagonal lattice obtained by distorting a regular hexagonal lattice in an arc-like shape or a hexagonal lattice obtained by distorting a regular hexagonal lattice in an arc-like shape and stretching and distorting it in the direction of the arc-shaped arrangement.

In the first to fourth inventions, the structures with a conical form or the pillar-shaped structures are arranged at a pitch shorter than or equal to a wavelength range of light in a use environment and the lower portions of the structures adjacent to one another are connected to one another. This can smooth the change in an effective refractive index in the depth direction of the structures. Thus, the effective refractive index in the depth direction of the structures can be changed so as to gradually increase toward the base and draw an S-shaped curved line. Furthermore, by changing the effective refractive index in the depth direction of the structures so that the effective refractive index gradually increases toward the base and draws an S-shaped curved line, the boundary for light becomes unclear, which can reduce the reflected light on the surface of the base.

Advantageous Effects

As described above, according to the present invention, an optical element having good anti-reflection characteristics can be provided. In particular, when the structures are tall, good anti-reflection characteristics can be achieved.

Brief Description of Drawings

Fig. 1A is a schematic plan view showing an example of a configuration of an optical element according to a first embodiment of the present invention. Fig. 1B is a partially enlarged plan view of the optical element shown in Fig. 1A. Fig. 1C is a sectional view taken along track T1, T3, ⋯ of Fig. 1B. Fig. 1D is a sectional view taken along track T2, T4, ⋯ of Fig. 1B.

Fig. 2 is a graph showing an example of a refractive index profile of the optical element according to the first embodiment of the present invention.

Fig. 3 is a partially enlarged perspective view of the optical element shown in Fig. 1.

Fig. 4A is a schematic view showing an exemplary arrangement of structures 3 having a cone-like shape or a truncated cone-like shape. Fig. 4B is a schematic view showing an exemplary arrangement of structures 3 having an elliptic cone-like shape or a truncated elliptic cone-like shape.

Fig. 5 is a sectional view showing an example of a shape of a structure.

Figs. 6A to 6C are diagrams for describing the definition of a changing point.

Fig. 7A is a perspective view showing an example of a configuration of a roll master for manufacturing the optical element according to the first embodiment of the present invention. Fig. 7B is an enlarged plan view of a surface of the roll master in Fig. 7A.

Fig. 8 is a schematic view showing an example of a configuration of an exposure apparatus used in a moth-eye pattern exposure step.

Figs. 9A to 9C are process diagrams for describing an example of a method for manufacturing the optical element according to the first embodiment of the present invention.

Figs. 10A to 10C are process diagrams for describing an example of a method for manufacturing the optical element according to the first embodiment of the present invention.

Fig. 11A is a schematic plan view showing an example of a configuration of an optical element according to a second embodiment of the present invention. Fig. 11B is a partially enlarged plan view of the optical element shown in Fig. 11A. Fig. 11C is a sectional view taken along track T1, T3, ⋯ of Fig. 11B. Fig. 11D is a sectional view taken along track T2, T4, ⋯ of Fig. 11B.

Fig. 12A is a plan view showing an example of a configuration of a disc master for manufacturing the optical element according to the second embodiment of the present invention. Fig. 12B is an enlarged plan view of a surface of the disc master in Fig. 12A.

Fig. 13 is a schematic view showing an example of a configuration of an exposure apparatus used in a moth-eye pattern exposure step.

Fig. 14A is a schematic plan view showing an example of a configuration of an optical element according to a third embodiment of the present invention. Fig. 14B is a partially enlarged plan view of the optical element shown in Fig. 14A. Fig. 14C is a sectional view taken along track T1, T3, ⋯ of Fig. 14B. Fig. 14D is a sectional view taken along track T2, T4, ⋯ of Fig. 14B.

Fig. 15A is a schematic plan view showing an example of a configuration of an optical element according to a fourth embodiment of the present invention. Fig. 15B is a partially enlarged plan view of the optical element shown in Fig. 15A. Fig. 15C is a sectional view taken along track T1, T3, ⋯ of Fig. 15B. Fig. 15D is a sectional view taken along track T2, T4, ⋯ of Fig. 15B.

Fig. 16 is a partially enlarged perspective view of the optical element shown in Fig. 15.

Fig. 17A is a schematic plan view showing an example of a configuration of an optical element according to a fifth embodiment of the present invention. Fig. 17B is a partially enlarged plan view of the optical element shown in Fig. 17A. Fig. 17C is a sectional view taken along track T1, T3, ⋯ of Fig. 17B. Fig. 17D is a sectional view taken along track T2, T4, ⋯ of Fig. 17B.

Fig. 18 is a partially enlarged perspective view of the optical element shown in Fig. 17.

Fig. 19 is a sectional view showing an example of a shape of structures of an optical element according to a sixth embodiment of the present invention.

Fig. 20 is a sectional view showing an example of a configuration of an optical element according to a seventh embodiment of the present invention.

Fig. 21 is a schematic view showing an example of a configuration of a liquid crystal display device according to an eighth embodiment of the present invention.

Fig. 22 is a schematic view showing an example of a configuration of a liquid crystal display device according to a ninth embodiment of the present invention.

Fig. 23 is a graph showing the refractive index profiles of Examples 1 to 3 and Comparative Example 1.

Figs. 24A to 24C are diagrams showing the shapes of structures in Examples 1 to 3.

Fig. 25 is a graph showing the reflection characteristics of Examples 1 to 3 and Comparative Example 1.

Fig. 26 is a graph showing the reflection characteristics of Example 3 and Comparative Example 1 in the case where the height of structures is changed from 200 nm to 500 nm.

Figs. 27A to 27C are diagrams showing the shapes of structures in Examples 4 to 6.

Fig. 28 is a graph showing the refractive index profiles of Comparative Examples 2 to 4.

Fig. 29 is a graph showing the reflection characteristics of Example 7 and Comparative Examples 2 and 3.

Fig. 30A is an AFM image of a formed surface of a master in Example 8. Fig. 30B shows a sectional profile of the AFM image shown in Fig. 30A.

Fig. 31 is a graph showing the anti-reflection characteristics of Example 8 and Comparative Examples 5 and 6.

Best Modes for Carrying Out the Invention

Embodiments of the present invention will be described with reference to the attached drawings in the following order.

1. First Embodiment (an example in which structures are two-dimensionally arranged linearly in a hexagonal lattice pattern)
2. Second Embodiment (an example in which structures are two-dimensionally arranged in an arc-like shape in a hexagonal lattice pattern)
3. Third Embodiment (an example in which structures are two-dimensionally arranged linearly in a tetragonal lattice pattern)
4. Fourth Embodiment (an example in which secondary structures are arranged in addition to primary structures)
5. Fifth Embodiment (an example in which depressed structures are formed on the surface of a base)
6. Sixth Embodiment (an example in which pillar-shaped structures are one-dimensionally arranged)
7. Seventh Embodiment (an example in which a thin film is formed instead of structures)
8. Eighth Embodiment (a first application example to display devices)
9. Ninth Embodiment (a second application example to display devices)

<1. First Embodiment>

[Configuration of Optical Element]

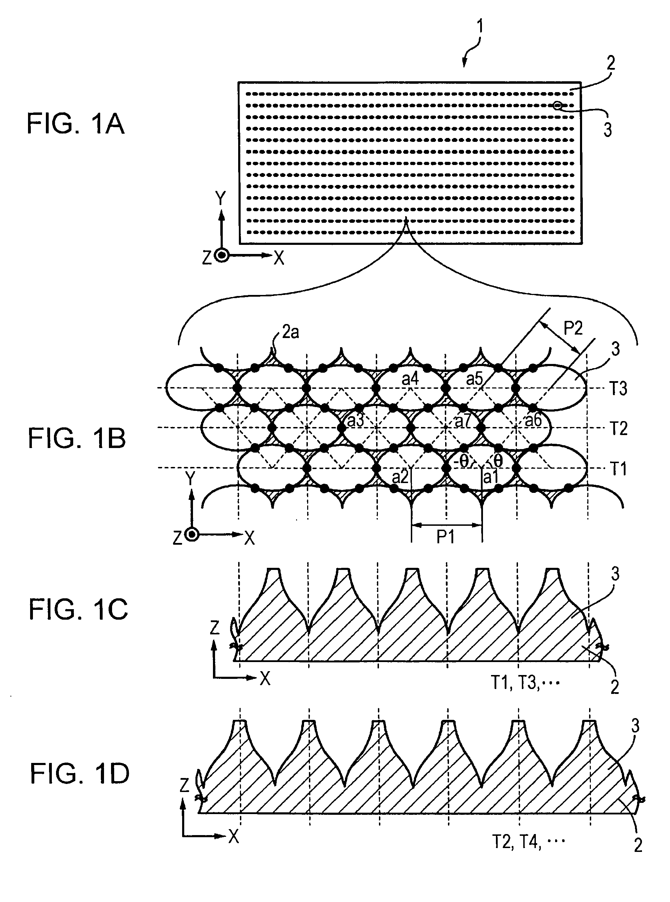

Fig. 1A is a schematic plan view showing an example of a configuration of an optical element according to a first embodiment of the present invention. Fig. 1B is a partially enlarged plan view of the optical element shown in Fig. 1A. Fig. 1C is a sectional view taken along track T1, T3, ⋯ of Fig. 1B. Fig. 1D is a sectional view taken along track T2, T4, ⋯ of Fig. 1B.

An optical element 1 is suitably applied to various optical components used for displays, optoelectronics, optical communications (optical fibers), solar cells, luminaires, and the like. Specifically, one of a polarizing element, a lens, an optical waveguide, a window material, and a display element can be exemplified as the optical component, for example. Examples of the polarizing element include a polarizer and a reflection polarizer.

The optical element 1 includes a base 2 and structures 3 formed on the surface of the base 2. The structures are projections with a conical form. The lower portions of the structures 3 adjacent to one another are connected to one another so as to overlap one another. Among the adjacent structures 3, the most adjacent structures 3 are preferably arranged in a track direction. This is because structures 3 arranged so as to be most adjacent to each other in such a position are easily manufactured by the method described below. The optical element 1 has an anti-reflection function against light that enters the surface of the base on which the structures 3 have been formed. Hereinafter, as shown in Fig. 1, two axes orthogonal to each other in one principal surface of the base 2 are referred to as an X axis and a Y axis and an axis perpendicular to the principal surface of the base 2 is referred to as a Z axis. Furthermore, when gaps 2a are present between the structures 3, a minute uneven shape is preferably provided to the gaps 2a. By providing such a minute uneven shape, the reflectivity of the optical element 1 can be further reduced.

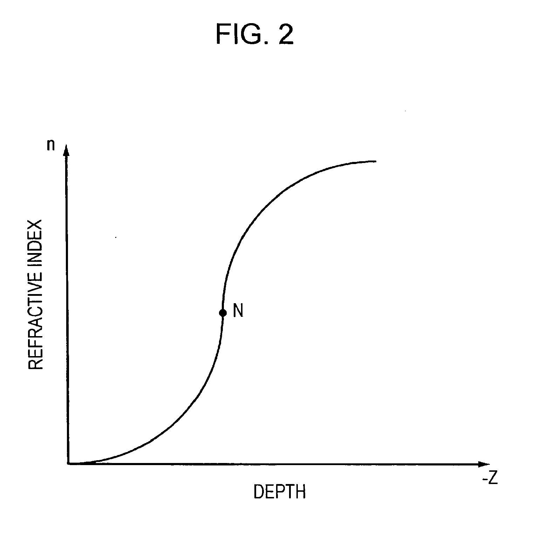

Fig. 2 shows an example of a refractive index profile of the optical element according to the first embodiment of the present invention. As shown in Fig. 2, the effective refractive index in the depth direction (-Z axis direction in Fig. 1) of the structures 3 gradually increases toward the base 2 and changes so as to draw an S-shaped curved line. That is, the refractive index profile has a single inflection point N. The inflection point corresponds to the shape of a side face of the structures 3. By changing the effective refractive index in such a manner, the boundary for light becomes unclear. This reduces reflected light, which can improve the anti-reflection characteristics of the optical element 1. The change in the effective refractive index in the depth direction is preferably a monotonic increase. Herein, the S-shape includes an inverse S-shape, that is, a Z-shape.

Furthermore, the change in the effective refractive index in the depth direction is preferably greater on at least one of the top side and base side of the structures 3 than an average of a slope of the effective refractive index, and is more preferably greater on both the top side and base side of the structures 3 than the average. This can provide good anti-reflection characteristics.

Hereinafter, the base 2 and the structures 3 constituting the optical element 1 are described in order.

(Base)

The base 2 is a transparent base having transparency. The base 2 is mainly composed of, for example, a transparent synthetic resin such as polycarbonate (PC) or polyethylene terephthalate (PET) or glass, but the material of the base 2 is not particularly limited to these materials.

The base 2 is, for example, in the shape of a film, sheet, plate, or block, but the shape of the base 2 is not particularly limited to these shapes. The shape of the base 2 is preferably selected and determined in accordance with the shape of the main body of various optical devices that require predetermined anti-reflection functions such as displays, optoelectronic devices, optical communication devices, solar cells, and illuminating devices or in accordance with the shape of a sheet- or film-shaped anti-reflective component attached to these optical devices.

(Structure)

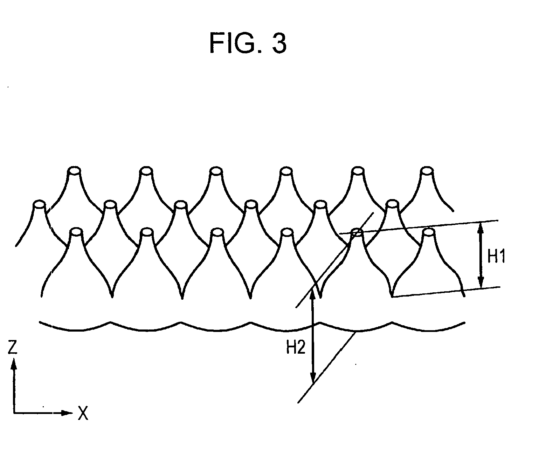

Fig. 3 is a partially enlarged perspective view of the optical element shown in Fig. 1. A large number of structures 3 that are projections are arranged on the surface of the base 2. The structures 3 are periodically and two-dimensionally arranged at a short pitch shorter than or equal to the wavelength range of light in a use environment, for example, at a pitch substantially equal to the wavelength of visible light. The wavelength range of light in a use environment is, for example, a wavelength range of ultraviolet light, a wavelength range of visible light, or a wavelength range of infrared light. Herein, the wavelength range of ultraviolet light is a wavelength range of 10 nm to 360 nm. The wavelength range of visible light is a wavelength range of 360 nm to 830 nm. The wavelength range of infrared light is a wavelength range of 830 nm to 1 mm.

The structures 3 of the optical element 1 has a configuration including multiple rows of tracks T1, T2, T3, ··· (hereinafter may be collectively referred to as "track T") provided on the surface of the base 2. Herein, the track is a region where the structures 3 are linearly arranged in rows.

In the two adjacent tracks T, the structures 3 arranged on one track are shifted by half a pitch from the structures 3 arranged on the other track. Specifically, in the two adjacent tracks T, at the intermediate positions (at the positions shifted by half a pitch) between the structures 3 arranged on one track (e.g., T1), the structures 3 arranged on the other track (e.g., T2) are disposed. Consequently, as shown in Fig. 1B, in the three adjacent rows of tracks (T1 to T3), the structures 3 are arranged so as to form a hexagonal lattice pattern or a quasi-hexagonal lattice pattern with the centers of the structures 3 being positioned at points a1 to a7. In the first embodiment, the hexagonal lattice pattern means a regular hexagonal lattice pattern. In addition, the quasi-hexagonal lattice pattern means, unlike a regular hexagonal lattice pattern, a hexagonal lattice pattern that is stretched and distorted in the track extending direction (X axis direction).

When the structures 3 are arranged so as to form a quasi-hexagonal lattice pattern, as shown in Fig. 1B, the arrangement pitch P1 (distance between a1 and a2) of the structures 3 on the same track (e.g., T1) is preferably longer than the arrangement pitch of the structures 3 between the two adjacent tracks (e.g., T1 and T2), that is, the arrangement pitch P2 (e.g., distance between a1 and a7 or a2 and a7) of the structures 3 in the ±θ direction with respect to the track extending direction. By arranging the structures 3 in such a manner, the packing density of the structures 3 can be further improved.

The lower portions of the structures 3 are connected to, for example, some or all of lower portions of the adjacent structures 3. By connecting the lower portions of structures to one another in such a manner, the effective refractive index in the depth direction of the structures 3 can be smoothly changed. As a result, an S-shaped refractive index profile can be provided. Furthermore, by connecting the lower portions of structures to one another, the packing fraction of the structures can be increased. Herein, in Fig. 1B, the positions of connecting portions formed in the case where all the adjacent structures 3 are connected to one another are denoted by "solid-black circles". Specifically, the connecting portions are formed between all the adjacent structures 3, between the adjacent structures 3 on the same track (e.g., between a1 and a2), or between the structures 3 on the adjacent tracks (e.g., between a1 and a7 and between a2 and a7). To achieve a smooth refractive index profile and good anti-reflection characteristics, the connecting portions are preferably formed between all the adjacent structures 3. To easily form the connecting portions by the manufacturing method described below, the connecting portions are preferably formed between the adjacent structures 3 on the same track. In the case where the structures 3 are periodically arranged in a hexagonal lattice pattern or in a quasi-hexagonal lattice pattern, for example, the structures 3 are connected to one another in directions of 6-fold symmetry.

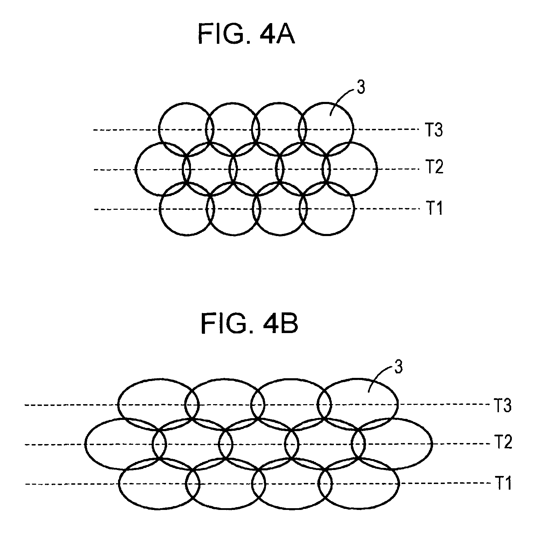

Fig. 4A shows an exemplary arrangement of the structures 3 having a cone-like shape or a truncated cone-like shape. Fig. 4B shows an exemplary arrangement of the structures 3 having an elliptic cone-like shape or a truncated elliptic cone-like shape. As shown in Figs. 4A and 4B, the structures 3 are preferably connected to one another so that the lower portions thereof overlap one another. By connecting the structures 3 to one another in such a manner, an S-shaped refractive index profile can be obtained and the packing fraction of the structures 3 can be increased. The structures are preferably connected to one another at portions smaller than or equal to 1/4 the maximum value of the wavelength range of light in a use environment on the basis of an optical path length adopted in consideration of a refractive index. Thus, good anti-reflection characteristics can be achieved.

Preferably, the height of the structures 3 is suitably set in accordance with the wavelength region of light to be transmitted. Specifically, the height of the structures 3 is preferably 5/14 or more and 10/7 or less the maximum value of the wavelength range of light in a use environment, more preferably 2/5 or more and 10/7 or less the maximum value, and further preferably 3/7 or more and 10/7 or less the maximum value. When the height is 5/14 or more the maximum value, the reflectivity can be suppressed to 0.3% or less in substantially the entire visible range of 400 nm to 700 nm. When the height is 2/5 or more the maximum value, the reflectivity can be suppressed to 0.1% or less in the visible range of 400 nm to 700 nm. When the height is 10/7 or less the maximum value, the structures 3 are easily formed by the manufacturing method described below. When visible light is transmitted, the height of the structures 3 is preferably 150 nm to 500 nm. The aspect ratio (height H/arrangement pitch P) of the structures 3 is preferably set in the range of 0.81 to 1.46. If the aspect ratio is less than 0.81, the reflection characteristics and transmission characteristics tend to degrade. If the aspect ratio is more than 1.46, the releasing property degrades during the manufacturing of the optical element 1 and it tends to be difficult to remove a replicated replica properly.

Note that, in the present invention, the aspect ratio is defined by formula (1) below:

$$\text{Aspect ratio} = H/P \quad \cdots \quad (1)$$

where H is the height of the structures 3, and P is the average arrangement pitch (average period).

Herein, the average arrangement pitch P is defined by formula (2) below:

$$\text{Average arrangement pitch } P = (P1 + P2 + P2)/3 \quad \cdots \quad (2)$$

where P1 is the arrangement pitch in the track extending direction (period in the track extending direction), and P2 is the arrangement pitch in the $\pm\theta$ direction with respect to the track extending direction (where $\theta = 60° - \delta$, where $\delta$ is preferably $0° < \delta \leq 11°$ and more preferably $3° \leq \delta \leq 6°$) (period in the $\theta$ direction).

Furthermore, the height H of the structures 3 is the height H2 in the column direction of the structures 3 (refer to Fig. 3). Herein, the column direction means a direction (Y axis direction) orthogonal to the track extending direction (X axis direction) in the surface of the base. The height H1 in the track extending direction of the structures 3 is preferably smaller than the height H2 in the column direction. This is because, when the optical element 1 is manufactured by the manufacturing method described below, the height H1 in the track extending direction of the structures 3 is easily decreased compared with the height H2 in the column direction.

In Fig. 3, each of the structures 3 has the same shape. However, the shape of the structures 3 is not limited thereto. The structures 3 having two or more different shapes may be formed on the surface of the base. Furthermore, the structures 3 may be formed integrally with the base 2.

In addition, the structures 3 do not necessarily have the same aspect ratio. The structures 3 may be configured so as to have a certain height distribution (e.g., in the range of about 0.81 to 1.46 in terms of an aspect ratio). By disposing the structures 3 having a height distribution, the wavelength dependence of reflection characteristics can be reduced. Consequently, an optical element 1 having good anti-reflection characteristics can be realized.

Herein, the height distribution means that the structures 3 having two or more heights (depths) are disposed on the surface of the base 2. That is, it means that structures 3 having a reference height and structures 3 having a height different from the reference height are disposed on the surface of the base 2. The structures 3 having a height different from the reference height are disposed, for example, on the surface of the base 2 periodically or aperiodically (at random). For example, the track extending direction, the column direction, or the like may be exemplified as the direction of the periodicity.

Preferably, the structures 3 are mainly composed of, for example, an ionizing radiation curable resin that is cured through ultraviolet rays or electron beams or a thermosetting resin that is cured through heat. Most preferably, the structures 3 are mainly composed of an ultraviolet curable resin that is cured through ultraviolet rays.

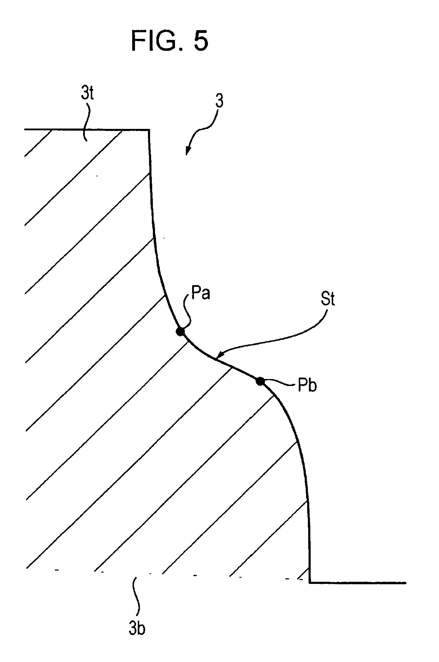

Fig. 5 is an enlarged sectional view showing an example of a shape of structures. Preferably, the side face of the structures 3 gradually widens toward the base 2 and changes so as to draw a shape of the square root of the S-shaped curved line shown in Fig. 2. Such a side face shape can provide good anti-reflection characteristics and improve ease of transference of the structures 3.

The top 3t of the structures 3 has, for example, a flat shape or a tapered protruding shape. When the top 3t of the structures 3 has a flat shape, the area ratio (St/S) of the area St of the flat surface on the top of the structures relative to the area S of a unit lattice is preferably decreased along with an increase in the height of the structures 3. This can improve the anti-reflection characteristics of the optical element 1. Herein, the unit lattice is, for example, a hexagonal lattice or a quasi-hexagonal lattice. The area ratio of the bottom of the structures (the area ratio (Sb/S) of the area Sb of the bottom of the structures relative to the area S of a unit lattice is preferably close to the area ratio of the top 3t. Furthermore, a low refractive index layer having a lower refractive index than the structures 3 may be formed on the top 3t of the structures 3. By forming such a low refractive index layer, the reflectivity can be reduced.

The side face of the structures 3 excluding the top 3t and the lower portion 3b preferably has a pair of first changing point Pa and second changing point Pb formed in that order in the direction from the top 3t to the lower portion 3b. As a result, the effective refractive index in the depth direction (-Z axis direction in Fig. 1) of the structures 3 can have a single inflection point.

Herein, the first changing point and the second changing point are defined as follows.

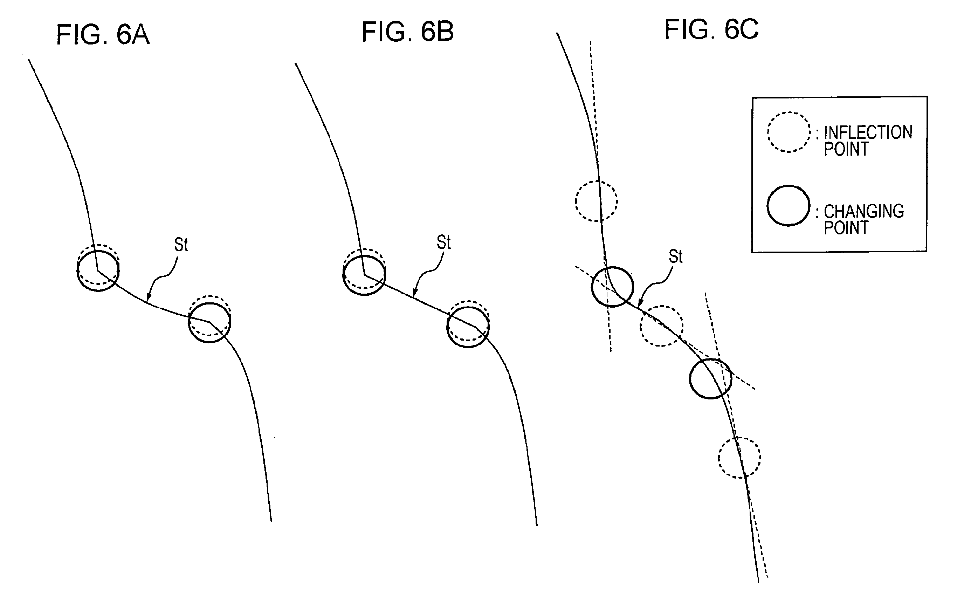

As shown in Figs. 6A and 6B, in the case where the side face from the top 3t to the lower portion 3b of the structures 3 is formed by joining a plurality of smooth curved surfaces in a discontinuous manner in the direction from the top 3t to the lower portion 3b of the structures 3, the joining points are the changing points. The changing points coincide with inflection points. Although differentiation cannot be performed accurately at the joining points, such an inflection point taken as a limit is also referred to as an inflection point herein. When the structures 3 have the above-described curved surface, the slope in the direction from the top 3t to the lower portion 3b of the structures 3 preferably becomes gentler at the first changing point Pa and then becomes steeper at the second changing point Pb.

As shown in Fig. 6C, in the case where the side face from the top 3t to the lower portion 3b of the structures 3 is formed by joining a plurality of smooth curved surfaces in a continuous manner in the direction from the top 3t to the lower portion 3b of the structures 3, the changing point is defined as follows. As shown in Fig. 7C, the point, on the curved line, closest from an intersection point at which tangent lines of two inflection points that are present on the side face of structures intersect with each other is referred to as a changing point.

The structures 3 preferably have a single step St on the side face between the top 3t and the lower portion 3b. When the structures 3 have a single step St, the above-described refractive index profile can be achieved. In other words, the effective refractive index in the depth direction of the structures 3 can be gradually increased toward the base 2 and at the same time can be changed so as to draw an S-shaped curved line. Examples of the step include a slope step and a parallel step, and a slope step is preferred. This is because, when the step St is a slope step, ease of transference can be improved compared with the case where the step St is a parallel step.

The slope step is a step that is not parallel to the surface of the base, but is inclined so that the side face widens in the direction from the top to the lower portion of the structures 3. The parallel step is a step that is parallel to the surface of the base. Herein, the step St is a section defined by the above-described first changing point Pa and second changing point Pb. Note that the step St does not include the flat surface of the top 3t or the curved surface or flat surface between the structures.

In view of ease of formation, the structures 3 preferably have a conical form that is axially symmetric except for the lower portion connected to the adjacent structures 3 or a conical form obtained by stretching or shrinking a conical form in the track direction. Examples of the conical form include a cone-like shape, a truncated cone-like shape, an elliptic cone-like shape, and a truncated elliptic cone-like shape. Herein, as described above, the conical form has a concept including an elliptic cone-like shape and a truncated elliptic cone-like shape, in addition to a cone-like shape and a truncated cone-like shape. Moreover, the truncated cone-like shape is a shape obtained by removing the top of a cone-like shape from the cone-like shape. The truncated elliptic cone-like shape is a shape obtained by removing the top of an elliptic cone-like shape from the elliptic cone-like shape. Furthermore, the entire shape of the structures 3 is not limited to these shapes, and needs only to be a shape in which the effective refractive index in the depth direction of the structures 3 gradually increases toward the base 2 and changes so as to draw an S-shape. Moreover, as described above, the conical form includes not only a complete conical form, but also a conical form having a step St on the side face.

The structures 3 having an elliptic cone-like shape are structures having a conical form in which the bottom is in the shape of an ellipse, an oblong, or an oval with a major axis and a minor axis, and the top has a tapered protruding shape. The structures 3 having a truncated elliptic cone-like shape are structures having a conical form in which the bottom is in the shape of an ellipse, an oblong, or an oval with a major axis and a minor axis, and the top has a flat surface. When the structures 3 have an elliptic cone-like shape or a truncated elliptic cone-like shape, the structures 3 are preferably disposed on the surface of the base such that the major axis of the bottom of the structures 3 is directed in the track extending direction (X axis direction).

The cross section of the structures 3 changes in the depth direction of the structures 3 so as to correspond to the above-described refractive index profile. Preferably, the cross section of the structures 3 monotonically increases along with an increase in the depth of the structures 3. Herein, the cross section of the structures 3 means an area of a section that is parallel to the surface of the base where the structures 3 have been arranged. The cross section of the structures preferably changes in the depth direction so that the cross sectional ratio of the structure 3 at different depths corresponds to the effective refractive index profile at those depths.

[Configuration of Roll Master]

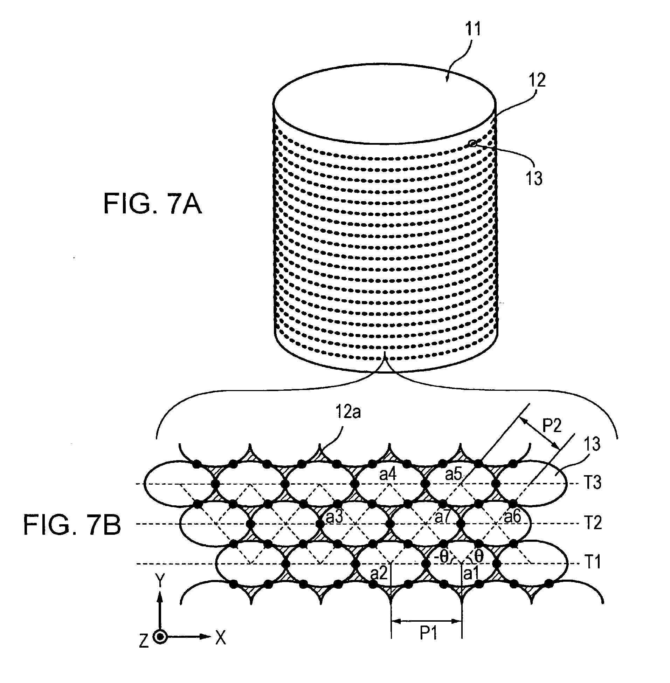

Fig. 7 shows an example of a configuration of a roll master for manufacturing the optical element having the above-described configuration. As shown in Fig. 7, a roll master 11 includes a large number of depressed structures 13 arranged on the surface of a cylinder- or column-shaped master 12. The structures 13 are periodically and two-dimensionally arranged at a pitch shorter than or equal to a wavelength of light in an environment where the optical element 1 is used, for example, at a pitch substantially equal to a wavelength of visible light. The structures 13 are arranged on the surface of the cylinder- or column-shaped master 12, for example, in a concentric or spiral manner. For example, the structures 13 are connected to the lower portions of some or all of the adjacent structures 3. Herein, in Fig. 7B, the positions of connecting portions formed in the case where all the adjacent structures 3 are connected to one another are denoted by "solid-black circles". The structures 13 are used for forming the protruding structures 3 on the surface of the above-described base 2. The master 12 can be composed of, for example, glass, but the material is not particularly limited thereto.

[Method for Manufacturing Optical Element]

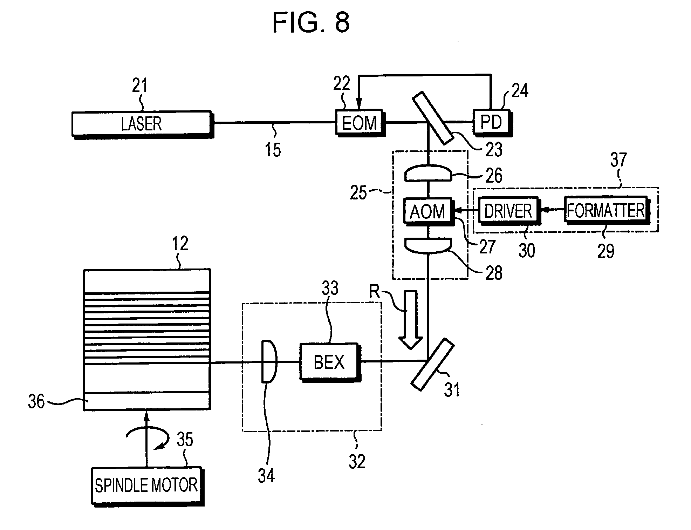

Next, an example of a method for manufacturing the optical element having the above-described configuration will be described with reference to Figs. 8 to 10.

A method for manufacturing the optical element according to the first embodiment is a method in which a process for making a master of optical discs is combined with an etching process. The manufacturing method includes a resist layer formation step of forming a resist layer on a master, an exposure step of forming a latent image of a moth-eye pattern on the resist layer, a development step of developing the resist layer on which the latent image has been formed, an etching step of making a roll master, and a replication step of making a replica substrate.

(Configuration of Exposure Apparatus)

First, a configuration of an exposure apparatus used in the moth-eye pattern exposure step will be described with reference to Fig. 8. The exposure apparatus is configured on the basis of an optical disc recording apparatus.

A laser light source 21 is a light source for exposing a resist formed on the surface of the master 12 serving as a recording medium, and oscillates, for example, a laser beam 15 for recording with a wavelength X of 266 nm. The laser beam 15 emitted from the laser light source 21 travels in a straight line as a collimated beam and enters an electro optical modulator (EOM) 22. The laser beam 15 transmitted through the electro optical modulator 22 is reflected by a mirror 23 and guided to an optical modulation system 25.

The mirror 23 includes a polarization beam splitter and has a function that reflects one polarized component and transmits the other polarized component. The polarized component transmitted through the mirror 23 is received by a photodiode 24, and the electro optical modulator 22 is controlled in accordance with the signal of the received polarized component to perform phase modulation of the laser beam 15.

In the optical modulation system 25, the laser beam 15 is focused by a collective lens 26 on an acoust-optic modulator (AOM) 27 composed of glass ($SiO_2$) or the like. After the laser beam 15 is intensity-modulated by the acoust-optic modulator 27 and diverged, the laser beam 15 is collimated by a collimating lens 28. The laser beam 15 emitted from the optical modulation system 25 is reflected by a mirror 31 and guided onto a moving optical table 32 in a horizontal and parallel manner.

The moving optical table 32 includes a beam expander 33 and an objective lens 34. The laser beam 15 guided to the moving optical table 32 is shaped into a desired beam form by the beam expander 33, and then applied to the resist layer on the master 12 through the objective lens 34. The master 12 is placed on a turntable 36 connected to a spindle motor 35. Subsequently, the exposure step of the resist layer is performed by intermittently irradiating the resist layer with the laser beam 15 while the master 12 is rotated and the laser beam 15 is moved in the height direction of the master 12. The resulting latent image has, for example, a substantially elliptical shape having a major axis in the circumferential direction. The laser beam 15 is moved by moving the moving optical table 32 in the direction indicated by an arrow R.

The exposure apparatus includes a control mechanism 37 for forming, on the resist layer, a latent image corresponding to the two-dimensional pattern of the hexagonal lattice or quasi-hexagonal lattice shown in Fig. 1B. The control mechanism 37 includes a formatter 29 and a driver 30. The formatter 29 includes a polarity inversion unit, and the polarity inversion unit controls the timing when the resist layer is irradiated with the laser beam 15. The driver 30 controls the acoust-optical modulator 27 in response to the output from the polarity inversion unit.

In the exposure apparatus, a polarity inversion formatter signal is synchronized to a rotation controller of the recording apparatus to generate a signal for each track so that two-dimensional patterns are spatially linked to one another, and intensity modulation is performed by the acoust-optical modulator 27. By performing patterning at constant angular velocity (CAV) and at an appropriate number of revolutions, an appropriate modulation frequency, and an appropriate feed pitch, a hexagonal or quasi-hexagonal lattice pattern can be recorded on the resist layer.

Hereinafter, the individual steps in the method for manufacturing the optical element according to the first embodiment of the present invention will be described one by one.

(Resist Layer Formation Step)

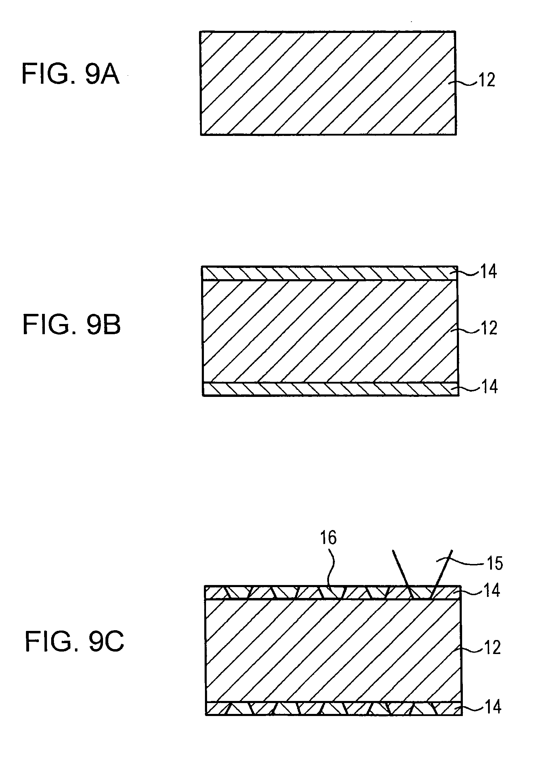

First, as shown in Fig. 9A, a cylinder- or column-shaped master 12 is prepared. The master 12 is, for example, a glass master. Next, as shown in Fig. 9B, a resist layer 14 is formed on a surface of the master 12. The resist layer 14 can be composed of, for example, either an organic resist or an inorganic resist. Examples of the organic resist include novolac resists and chemically-amplified resists. Furthermore, examples of the inorganic resist include metal oxides containing one or more transition metals such as tungsten and molybdenum.

(Exposure Step)

Next, as shown in Fig. 9C, using the exposure apparatus described above, the resist layer 14 is irradiated with the laser beam (exposure beam) 15 while the master 12 is rotated. In this step, the entire surface of the resist layer 14 is exposed by intermittently irradiating the resist layer 14 with the laser beam 15 while the laser beam 15 is moved in the height direction of the master 12. As a result, a latent image 16 following the trajectory of the laser beam 15 is formed over the entire surface of the resist layer 14, for example, at a pitch substantially equal to a wavelength of visible light.

(Development Step)

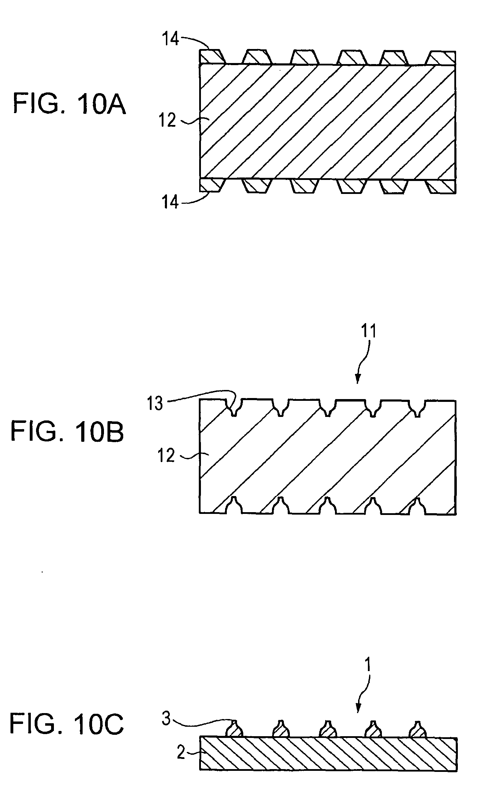

Next, a developer is dropwise applied onto the resist layer 14 while the master 12 is rotated, whereby the resist layer 14 is subjected to development treatment as shown in Fig. 9A. In the case where the resist layer 14 is formed using a positive resist, an exposed portion exposed to the laser beam 15 has an increased rate of dissolution in the developer compared with a non-exposed portion. As a result, as shown in Fig. 10A, a pattern corresponding to the latent image (exposed portion) 16 is formed on the resist layer 14.

(Etching Step)

Next, for example, the surface of the master 12 is etched using, as a mask, the pattern (resist pattern) of the resist layer 14 formed on the master 12. Specifically, an etching treatment and an ashing treatment are alternately performed. Consequently, as shown in Fig. 10B, there can be obtained depressions having an elliptic cone-like shape or a truncated elliptic cone-like shape with a major axis directed in the track extending direction, that is, structures 13. Furthermore, a glass master having a depth of three times or more the thickness of the resist layer 14 (selectivity: 3 or more) can be produced to achieve a high aspect ratio of structures 3. Moreover, by appropriately adjusting the treatment time of the etching treatment and the ashing treatment, a step can be formed on the side face of the structures 13. The etching is preferably performed by dry etching. Examples of the dry etching that can be used include plasma etching and reactive ion etching (RIE). In addition, for example, isotropic etching or anisotropic etching can be used as the etching method.

Thus, a roll master 11 having a hexagonal lattice pattern or a quasi-hexagonal lattice pattern can be obtained.

(Replication Step)

Next, the roll master 11 and the base 2 such as an acrylic sheet to which an ultraviolet curable resin has been applied are brought into close contact with each other. After the ultraviolet curable resin is cured by irradiation with ultraviolet rays, the base 2 is detached from the roll master 11. Consequently, as shown in Fig. 10C, an intended optical element 1 is manufactured.

According to the first embodiment, the structures 3 have a conical form, and the effective refractive index in the depth direction of the structures 3 gradually increases toward the base 2 and changes so as to draw an S-shaped curved line. Consequently, the boundary for light becomes unclear due to the shape effect of the structures 3, which can reduce reflected light. Thus, good anti-reflection characteristics can be achieved. In particular, when the structures 3 are tall, good anti-reflection characteristics can be achieved. Specifically, when the height of the structures 3 is preferably 5/14 or more and 10/7 or less, more preferably 2/5 or more and 10/7 or less, and further preferably 3/7 or more and 10/7 or less the maximum value of the wavelength range of light in a use environment, particularly good anti-reflection characteristics can be achieved. Furthermore, since the lower portions of the adjacent structures 3 are connected to one another so as to overlap one another, the packing fraction of the structures 3 can be increased and the structures 3 can be easily formed.

Preferably, the effective refractive index profile in the depth direction of the structures 3 is changed so as to draw an S-shape, and the structures are arranged in a (quasi-)hexagonal lattice pattern or a (quasi-)tetragonal lattice pattern. Furthermore, each of the structures 3 preferably has an axially symmetric structure or a structure obtained by stretching or shrinking the axially symmetric structure in the track direction. Moreover, the adjacent structures 3 are preferably connected to one another near the base. Such a configuration can provide high-performance anti-reflection structures that can be manufactured more easily.

When the optical element 1 is manufactured by a method in which a process for making a master of optical discs is combined with an etching process, the time (exposure time) required in the process for making a master can be considerably shortened compared with the case where the optical element 1 is manufactured by electron-beam exposure. Thus, the productivity of the optical element 1 can be significantly improved.

When the shape of the top of the structures 3 is a flat shape but not a tapered shape, the durability of the optical element 1 can be improved. The releasing property of the optical element 1 from the roll master 11 can also be improved. When a step of the structures 3 is a slope step, ease of transference can be improved compared with the case where a parallel step is used.

<Second Embodiment>

[Configuration of Optical Element]

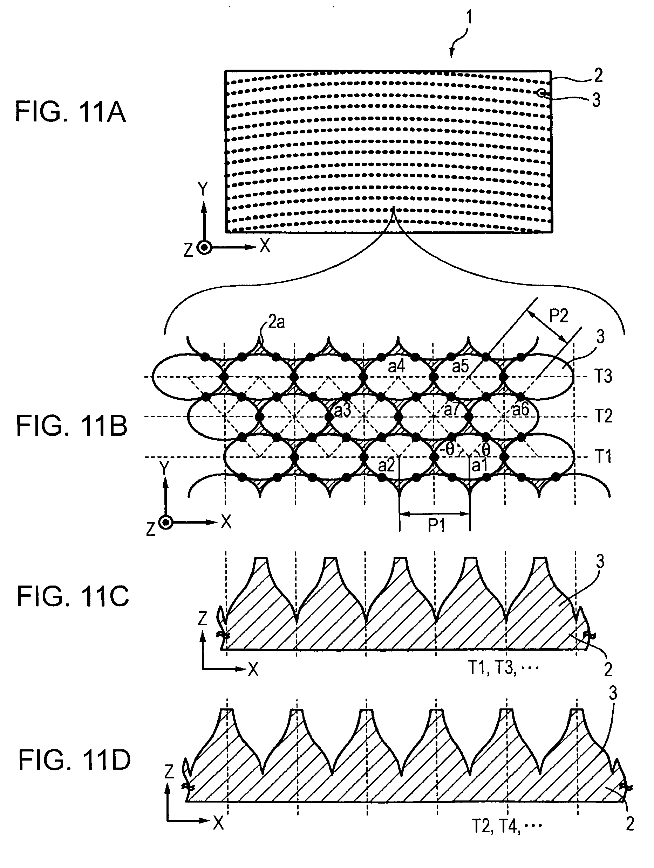

Fig. 11A is a schematic plan view showing an example of a configuration of an optical element according to a second embodiment of the present invention. Fig. 11B is a partially enlarged plan view of the optical element shown in Fig. 11A. Fig. 11C is a sectional view taken along track T1, T3, ··· of Fig. 11B. Fig. 11D is a sectional view taken along track T2, T4, ··· of Fig. 11B.

In an optical element 1 according to the second embodiment, tracks T have an arc-like shape and structures 3 are arranged in an arc-like manner. As shown in Fig. 11B, in the three adjacent rows of tracks (T1 to T3), the structures 3 are arranged so as to form a quasi-hexagonal lattice pattern with the centers of the structures 3 being positioned at points a1 to a7. Herein, the quasi-hexagonal lattice pattern means, unlike a regular hexagonal lattice pattern, a hexagonal lattice pattern distorted along an arc-like shape of the tracks T. Alternatively, the quasi-hexagonal lattice pattern means, unlike a regular hexagonal lattice pattern, a hexagonal lattice pattern that is distorted along an arc-like shape of the tracks T and stretched and distorted in the track extending direction (X axis direction).

Except for the configuration of the optical element 1 described above, the configuration is the same as that in the first embodiment, and the description thereof is omitted.

[Configuration of Disc Master]

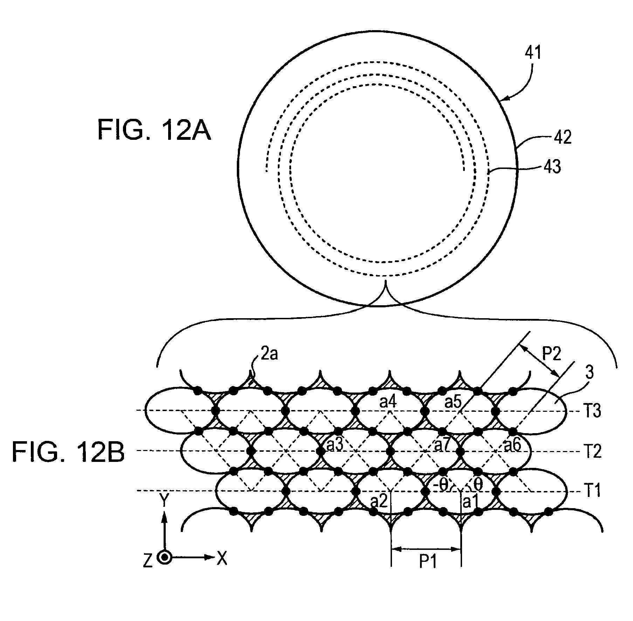

Fig. 12 shows an example of a configuration of a disc master for manufacturing the optical element having the above-described configuration. As shown in Fig. 12, a disc master 41 has a configuration in which a large number of depressed structures 43 are arranged on a surface of a disc-shaped master 42. The structures 13 are periodically and two-dimensionally arranged at a pitch shorter than or equal to a wavelength range of light in an environment where the optical element 1 is used, for example, at a pitch substantially equal to a wavelength of visible light. For example, the structures 43 are disposed on concentric tracks or on a spiral track.

Except for the configuration of the disc master 41 described above, the configuration is the same as that of the roll master 11 in the first embodiment, and the description thereof is omitted.

[Method for Manufacturing Optical Element]

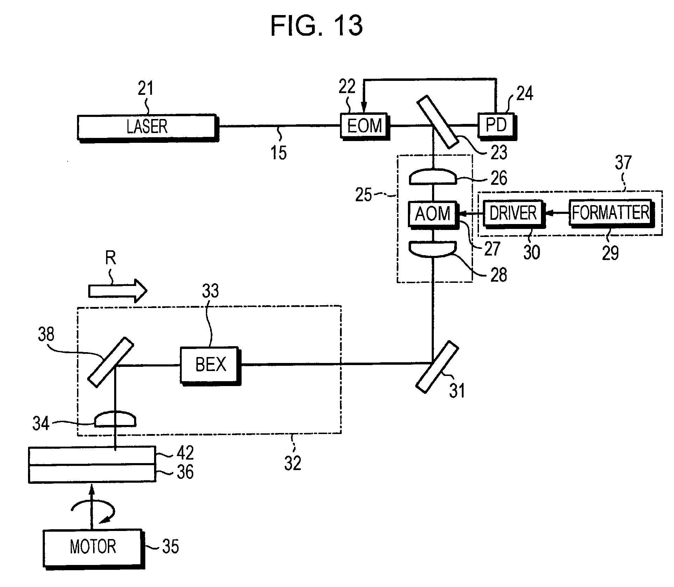

First, an exposure apparatus used for making the disc master 41 having the above-described configuration will be described with reference to Fig. 13.

A moving optical table 32 includes a beam expander 33, a mirror 38, and an objective lens 34. The laser beam 15 guided to the moving optical table 32 is shaped into a desired beam form by the beam expander 33, and then applied to the resist layer on the disc-shaped master 42 through the mirror 38 and the objective lens 34. The master 42 is placed on a turntable (not shown) connected to a spindle motor 35. Subsequently, the exposure step of the resist layer is performed by intermittently irradiating the resist layer on the master 42 with the laser beam while the master 42 is rotated and the laser beam 15 is moved in the radial direction of rotation of the master 42. The resulting latent image has a substantially elliptical shape having a major axis in the circumferential direction. The laser beam 15 is moved by moving the moving optical table 32 in the direction indicated by an arrow R.

The exposure apparatus shown in Fig. 13 includes a control mechanism 37 for forming, on the resist layer, a latent image of the two-dimensional hexagonal lattice or quasi-hexagonal lattice pattern shown in Fig. 11. The control mechanism 37 includes a formatter 29 and a driver 30. The formatter 29 includes a polarity inversion unit, and the polarity inversion unit controls the timing when the resist layer is irradiated with the laser beam 15. The driver 30 controls an acoust-optical modulator 27 in response to the output from the polarity inversion unit.

The control mechanism 37 synchronizes the intensity modulation of the laser beam 15 performed by the AOM 27, the driving rotational speed of the spindle motor 35, and the moving speed of the moving optical table 32 for each track so that the two-dimensional patterns of the latent image are spatially linked to one another. The rotation of the master 42 is controlled at a constant angular velocity (CAV). In addition, patterning is performed using an appropriate number of revolutions of the master 42 provided by the spindle motor 35, appropriate frequency modulation of laser intensity provided by the AOM 27, and an appropriate feed pitch of the laser beam 15 provided by the moving optical table 32. Thus, a latent image having a hexagonal lattice pattern or a quasi-hexagonal lattice pattern is formed on the resist layer.

Furthermore, the control signal of the polarity inversion unit is gradually changed such that the spatial frequency (pattern density of the latent image, P1: 330, P2: 300 nm; P1: 315 nm, P2: 275 nm; or P1: 300 nm, P2: 265 nm) becomes uniform. More specifically, exposure is performed while an irradiation period of the resist layer with the laser beam 15 is changed for each track, and frequency modulation of the laser beam 15 is performed by the control mechanism 37 such that P1 becomes about 330 nm (315 nm, or 300 nm) on each track T. That is, the modulation is controlled such that the irradiation period of the laser beam becomes shorter as the track position becomes distant from the center of the disc-shaped master 42. Thus, a nano-pattern in which the spatial frequency is uniform over the entire substrate can be formed.

Hereinafter, an example of a method for manufacturing the optical element according to the second embodiment of the present invention will be described.

First, a disc master 41 is made by the same method as in the first embodiment, except that a resist layer formed on a disc-shaped master is exposed using the exposure apparatus having the above-described configuration. Next, the disc master 41 and the base 2 such as an acrylic sheet to which an ultraviolet curable resin has been applied are brought into close contact with each other. After the ultraviolet curable resin is cured by irradiation with ultraviolet rays, the base 2 is detached from the disc master 41. Thus, a disc-shaped optical element is obtained. Subsequently, the disc-shaped optical element is cut into optical elements 1 having a desired shape such as a rectangle. Accordingly, an intended optical element 1 is manufactured.

According to the second embodiment, as in the case where the structures 3 are linearly arranged, an optical element 1 having good anti-reflection characteristics and high productivity can be obtained.

<Third Embodiment>

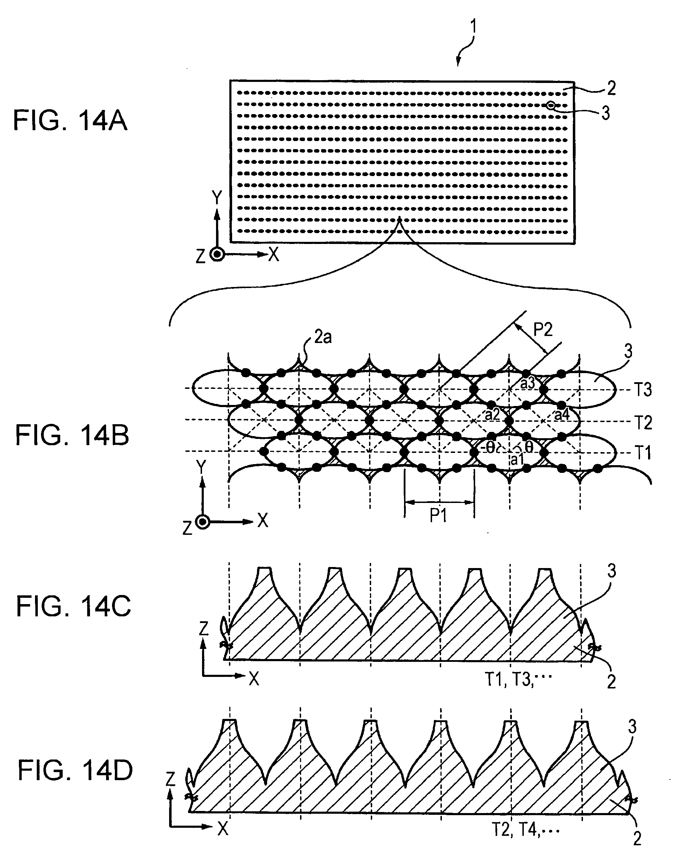

Fig. 14A is a schematic plan view showing an example of a configuration of an optical element according to a third embodiment of the present invention. Fig. 14B is a partially enlarged plan view of the optical element shown in Fig. 14A. Fig. 14C is a sectional view taken along track T1, T3, ⋯ of Fig. 14B. Fig. 14D is a sectional view taken along track T2, T4, ⋯ of Fig. 14B.

An optical element 1 according to the third embodiment differs from that of the first embodiment in that, in the three adjacent rows of tracks, structures 3 form a tetragonal lattice pattern or a quasi-tetragonal lattice pattern. Herein, the quasi-tetragonal lattice pattern means, unlike a regular tetragonal lattice pattern, a tetragonal lattice pattern that is stretched and distorted in the track extending direction (X axis direction). When the structures 3 are periodically arranged in a tetragonal lattice pattern or in a quasi-tetragonal lattice pattern, for example, the structures 3 lie adjacent to one another in directions of 4-fold symmetry. Moreover, by further stretching and distorting the tetragonal lattice, a structure 3 can also be laid adjacent to structures 3 on the same track, and an arrangement with high packing density is achieved in which one structure lies adjacent to structures not only in directions of 4-fold symmetry but also at two positions on the same track.

In the two adjacent tracks T, at the intermediate positions (at the positions shifted by half a pitch) between the structures 3 arranged on one track (e.g., T1), the structures 3 on the other track (e.g., T2) are disposed. Consequently, as shown in Fig. 14B, in the three adjacent rows of tracks (T1 to T3), the structures 3 are arranged so as to form a tetragonal lattice pattern or a quasi-tetragonal lattice pattern with the centers of the structures 3 being positioned at points a1 to a4.

Preferably, the height of the structures 3 is appropriately set in accordance with the wavelength range of light to be transmitted. For example, when visible light is transmitted, the height of the structures 3 is preferably 150 nm to 500 nm in this manufacturing method. The pitch P2 in the θ direction with respect to the track T is, for example, about 275 nm to 297 nm. In addition, the structures 3 may be configured so as to have a certain height distribution.

The arrangement pitch P1 of the structures 3 on the same track is preferably longer than the arrangement pitch P2 of the structures 3 between the two adjacent tracks. Furthermore, the ratio P1/P2 preferably satisfies the relationship $1.4 < P1/P2 \leq 1.5$, where P1 is the arrangement pitch of the structures 3 on the same track and P2 is the arrangement pitch of the structures 3 between the two adjacent tracks. By selecting such a numerical range, the packing fraction of the structures having an elliptic cone-like shape or a truncated elliptic cone-like shape can be increased. Therefore, anti-reflection characteristics can be improved.

In the third embodiment, an optical element 1 having good anti-reflection characteristics and high productivity can be obtained as in the first embodiment.

<Fourth Embodiment>

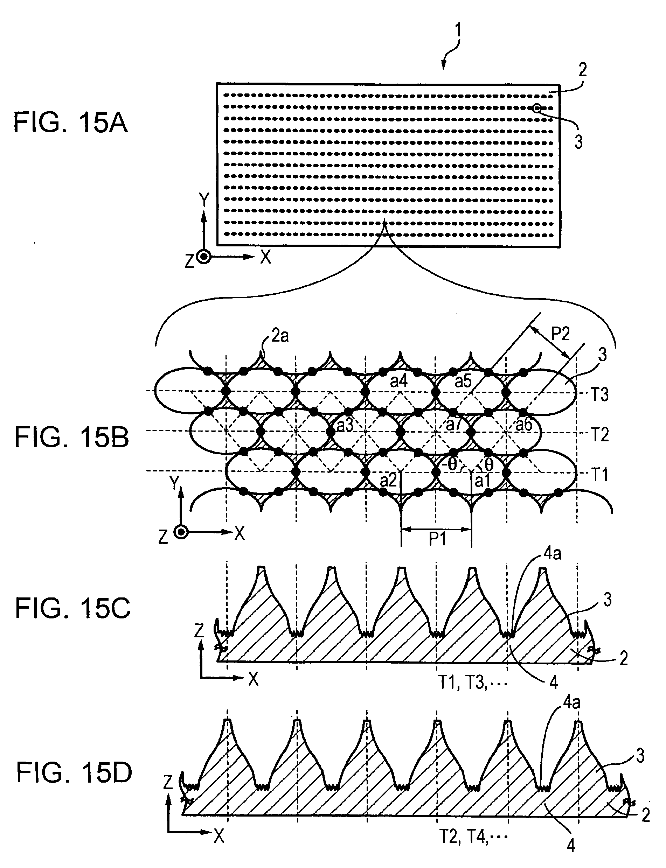

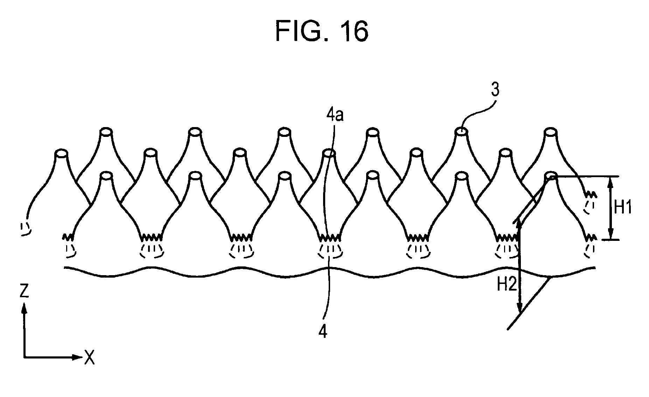

Fig. 15A is a schematic plan view showing an example of a configuration of an optical element according to a fourth embodiment of the present invention. Fig. 15B is a partially enlarged plan view of the optical element shown in Fig. 15A. Fig. 15C is a sectional view taken along track T1, T3, ⋯ of Fig. 15B. Fig. 15D is a sectional view taken along track T2, T4, ⋯ of Fig. 15B. Fig. 16 is a partially enlarged perspective view of the optical element shown in Fig. 15.

An optical element 1 according to the fourth embodiment differs from that of the first embodiment in that the optical element 1 further includes secondary structures 4 formed on the surface of the base 2, and the structures are connected to one another with the secondary structures 4 therebetween. The same parts as those in the first embodiment are designated by the same reference numerals, and the descriptions thereof are omitted. Note that, in the fourth embodiment, the structures 3 are referred to as primary structures 3 to avoid the confusion between the structures 3 and the secondary structures 4.

The secondary structures 4 are depressions or projections that are smaller than the primary structures. For example, the secondary structures 4 are minute protruding portions having a height smaller than that of the primary structures 3. Furthermore, when the height of the secondary structures 4 is smaller than or equal to about 1/4 the maximum value of the wavelength range of light in a use environment on the basis of an optical path length adopted in consideration of a refractive index, the secondary structures 4 contribute to an anti-reflection function. For example, the height of the secondary structures 4 is about 10 nm to 150 nm. The secondary structures 4 can be composed of, for example, the same material as that of the base 2 and the primary structures 3, but are preferably composed of a material having a lower refractive index than the materials constituting the base 2 and the primary structures 3. This is because the reflectivity can be further reduced. Furthermore, in the above description, the case where both the primary structures 3 and the secondary structures 4 are projections has been mainly described, but the primary structures 3 and the secondary structures 4 may be depressions. Moreover, the projection-depression relationship may be reversed between the primary structures 3 and the secondary structures 4. Specifically, when the primary structures 3 are projections, the secondary structures 4 may be depressions. When the primary structures 3 are depressions, the secondary structures 4 may be projections.

The secondary structures 4 are disposed, for example, in some or all of portions between the primary structures. Specifically, preferably, the secondary structures 4 are provided in the most adjacent portions between the primary structures 3, and the primary structures 3 are connected to one another by the secondary structures 4 provided in the most adjacent portions. In such a manner, the packing fraction of the primary structures 3 can be increased. Furthermore, the secondary structures 4 may be disposed in portions other than the portions between the primary structures. The spatial frequency component of the secondary structures 4 is preferably higher than the frequency component converted from the period of the primary structures 3. Specifically, the spatial frequency component of the secondary structures 4 is preferably two times or higher and more preferably four times or higher the frequency component converted from the period of the primary structures 3. Preferably, the spatial frequency component of the secondary structures 4 is not an integral multiple of the frequency component of the primary structures 3.

From the standpoint of ease of formation of the secondary structures 4, as shown in Fig. 15B, the secondary structures 4 are preferably arranged at some or all of the positions indicated by "solid-black circles" where the primary structures 3 having an elliptic cone-like shape, a truncated elliptic cone-like shape, or the like lie adjacent to one another. In such an arrangement, the secondary structures 4 are formed between all the adjacent structures 3, between the adjacent structures 3 on the same track (e.g., between a1 and a2), or between the structures 3 on the adjacent tracks (e.g., between a1 and a7 and between a2 and a7). When the primary structures 3 are arranged periodically in a hexagonal lattice pattern or in a quasi-hexagonal lattice pattern, for example, the primary structures 3 lie adjacent to one another in directions of 6-fold symmetry. In this case, preferably, the secondary structures 4 are provided in the adjacent portions, and the primary structures 3 are connected to one another by the secondary structures 4. Furthermore, when gaps 2a are present between the primary structures 3 as shown in Fig. 15B, from the standpoint of increasing the packing fraction, the secondary structures 4 are preferably formed in the gaps 2a between the primary structures 3. The secondary structures 4 may be formed both in the adjacent portions of the primary structures 3 and in the gaps 2a. Furthermore, the positions at which the secondary structures 4 are formed are not particularly limited to the examples described above. The secondary structures 4 may be formed on the entire surfaces of the primary structures 3.

Furthermore, from the standpoint of improving the reflection characteristics and transmission characteristics, at least one type of minute projections and depressions, for example, a minute uneven portion 4a is preferably formed on the surfaces of the secondary structures 4. Furthermore, in order to obtain an optical element 1 having a good anti-reflection function and small wavelength dependence, the minute uneven portion 4a of the secondary structures 4 is preferably formed so as to have a spatial frequency component with high frequency that is shorter than the period of the primary structures 3. For example, as shown in Fig. 16, a corrugated minute uneven portion 4a is preferably provided. The minute uneven portion 4a can be formed, for example, by appropriately selecting the conditions of etching such as RIE (reactive ion etching) in the optical element manufacturing process or the material for the master. For example, the uneven portion 4a can be formed using Pyrex (registered trademark) glass as the material for the master.

In the fourth embodiment, since the secondary structures 4 are further formed on the surface of the base 2, an S-shaped refractive index profile can be obtained. Thus, good anti-reflection characteristics can be achieved. However, since the optical element 1 according to the first embodiment includes adjacent structures directly connected to one another, the packing fraction of the optical element 1 is higher than that of the optical element 1 according to the fourth embodiment. Therefore, the optical element 1 according to the first embodiment has an S-shaped refractive index profile that changes more smoothly than that of the optical element 1 according to the fourth embodiment. Thus, when the structures 3 are tall, the optical element 1 according to the first embodiment can have better anti-reflection characteristics than the optical element 1 according to the fourth embodiment.

<Fifth Embodiment>

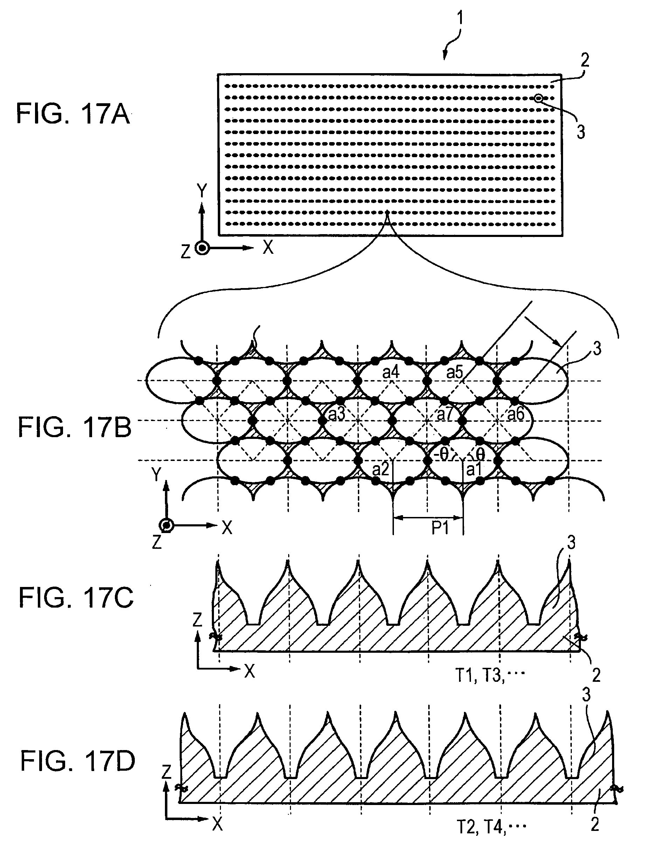

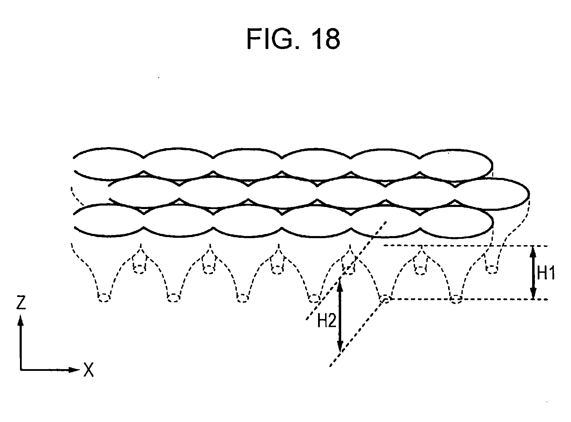

Fig. 17A is a schematic plan view showing an example of a configuration of an optical element according to a fifth embodiment of the present invention. Fig. 17B is a partially enlarged plan view of the optical element shown in Fig. 17A. Fig. 17C is a sectional view taken along track T1, T3, ⋯ of Fig. 17B. Fig. 17D is a sectional view taken along track T2, T4, ⋯ of Fig. 17B. Fig. 18 is a partially enlarged perspective view of the optical element shown in Fig. 17.

An optical element 1 according to the fifth embodiment differs from that of the first embodiment in that a large number of depressed structures 3 are arranged on the surface of the base. The shape of the structures 3 is a depression obtained by reversing the projection of the structures 3 in the first embodiment. Therefore, the effective refractive index in the depth direction (-Z axis direction in Fig. 17) of the structures 3 gradually increases toward the base 2 and changes so as to draw an S-shaped curved line. Note that, when the structures 3 are depressions as described above, the opening portions (the entrance portions of the depressions) of the depressed structures 3 are defined as lower portions and the lowermost portions (the deepest portions of the depressions) in the depth direction of the base 2 are defined as tops. In other words, the top and lower portion are defined using structures 3 that are insubstantial spaces. In this case, the effective refractive index shown in Fig. 2 gradually increases in the direction from the lower portion to the top. Furthermore, in the fifth embodiment, since the structures 3 are depressions, the height H of the structures 3 in formula (1) or the like is replaced with the depth H of the structures 3.

The fifth embodiment is the same as the first embodiment except for the above description.

In the fifth embodiment, since the depressions obtained by reversing the projections of the structures 3 in the first embodiment are used, the same effects as in the first embodiment can be achieved.

Furthermore, in the fifth embodiment, the lower portions of the adjacent structures 3 are connected to one another so that the adjacent structures are penetrated in the lower portions thereof. Therefore, the optical element 1 according to the fifth embodiment has low possibility that the walls between the structures are damaged, compared with an optical element having thin walls formed between all the adjacent structures. Accordingly, the durability can be improved.

<Sixth Embodiment>

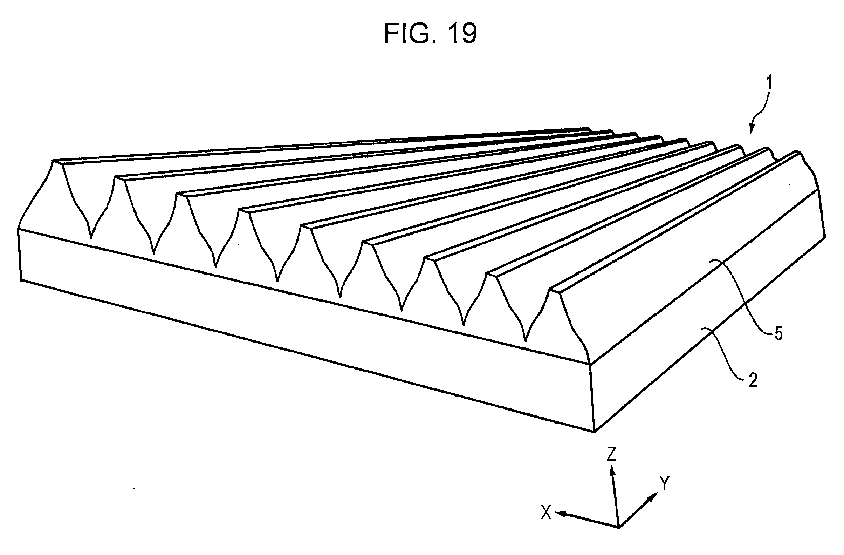

Fig. 19 is a perspective view showing an example of a configuration of an optical element according to a sixth embodiment of the present invention. As shown in Fig. 19, an optical element 1 according to the sixth embodiment differs from that of the first embodiment in that the optical element 1 includes pillar-shaped structures 5 that extend in a single direction on the surface of the base and the structures 5 are one-dimensionally arranged on the base 2. Note that the same parts as those in the first embodiment are designated by the same reference numerals, and the descriptions thereof are omitted.

The effective refractive index in the depth direction (-Z axis direction in Fig. 19) of the structures 5 gradually increases toward the base 2 and changes so as to draw an S-shaped curved line. That is, the refractive index profile has a single inflection point N. Furthermore, the pillar-shaped structures may be connected to one another such that portions of the pillar-shaped structures overlap one another or may be connected to one another such that portions between the pillar-shaped structures are secondary structures. In this case, by modifying the width of the pillar-shaped structures themselves, the pillar-shaped structures may be connected to one another such that portions of the structures overlap one another.

The structures 5 have a cylindrical surface that uniformly extends in a single direction (Y axis direction). The section (XZ section) obtained by cutting the structures 5 in the direction perpendicular to the ridgeline direction has a sectional shape that is the same as or similar to the refractive index profile shown in Fig. 2.

According to the sixth embodiment, a change in the effective refractive index of the ridgeline direction in the depth direction gradually increases toward the base 2 and draws an S-shaped curved line. Therefore, the boundary for light becomes unclear due to the shape effect of the structures 5, which can reduce reflected light. Thus, an optical element 1 having good anti-reflection characteristics can be obtained.

<Seventh Embodiment>

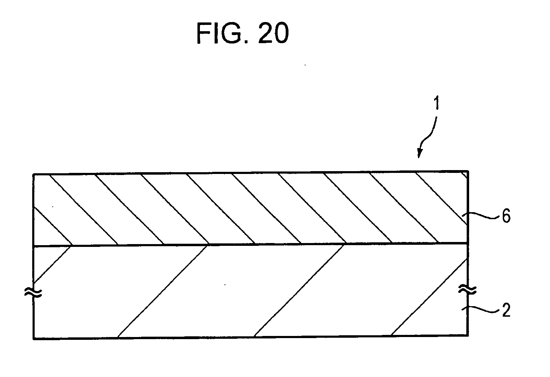

Fig. 20 is a sectional view showing an example of a configuration of an optical element according to a seventh embodiment of the present invention. As shown in Fig. 20, an optical element 1 according to the seventh embodiment differs from that of the first embodiment in that a gradient film 6 is formed on the base instead of the structures 3. Note that the same parts as those in the first embodiment are designated by the same reference numerals, and the descriptions thereof are omitted.

The gradient film 6 is a film composed of a material whose composition is gradually changed in the depth direction (thickness direction), whereby the refractive index in the depth direction is gradually changed. The refractive index on the surface side of the gradient film 6 is lower than that on the base side (interface side). The effective refractive index in the depth direction gradually increases toward the base 2 and changes so as to draw an S-shaped curved line. Consequently, the boundary for light becomes unclear, which can reduce reflected light. Thus, the anti-reflection characteristics of the optical element can be degraded.

The gradient film 6 can be formed by, for example, sputtering. Examples of the film formation method performed by sputtering include a method in which two types of target materials are simultaneously sputtered at a certain ratio and a method in which the content of process gas contained in the film is appropriately changed by performing reactive sputtering while the flow rate of the process gas is changed.

According to the seventh embodiment, the same effects as in the first embodiment can be achieved.

<Eighth Embodiment>

[Configuration of Liquid Crystal Display Device]

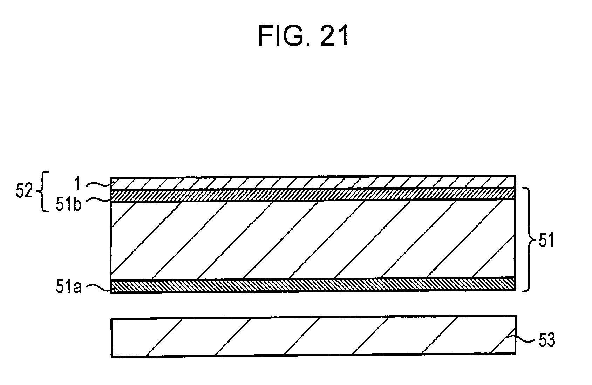

Fig. 21 shows an example of a configuration of a liquid crystal display device according to an eighth embodiment of the present invention. As shown in Fig. 21, the liquid crystal display device includes a backlight 53 that emits light and a liquid crystal panel 51 that temporally and spatially modulates the light emitted from the backlight 53 to display an image. Polarizers 51a and 51b, which are optical components, are respectively disposed on two surfaces of the liquid crystal panel 51. An optical element 1 is disposed on the polarizer 51b disposed on the display surface side of the liquid crystal panel 51. In the present invention, the polarizer 51b having the optical element 1 disposed on one principal surface thereof is referred to as an anti-reflective polarizer 52. The anti-reflective polarizer 52 is an example of anti-reflective optical components.

Hereinafter, the backlight 53, the liquid crystal panel 51, the polarizers 51a and 51b, and the optical element 1 constituting the liquid crystal display device will be described one by one.

(Backlight)

For example, a direct-type backlight, an edge-type backlight, or a planar light source-type backlight can be used as the backlight 53. The backlight 53 includes, for example, a light source, a reflecting plate, and an optical film. For example, a cold cathode fluorescent lamp (CCFL), a hot cathode fluorescent lamp (HCFL), an organic electroluminescence (OEL), an inorganic electroluminescence (IEL), a light emitting diode (LED), or the like is used as the light source.

(Liquid Crystal Panel)

Examples of the display mode that can be used for the liquid crystal panel 51 include a twisted nematic (TN) mode, a super twisted nematic (STN) mode, a vertically aligned (VA) mode, an in-plane switching (IPS) mode, an optically compensated birefringence (OCB) mode, a ferroelectric liquid crystal (FLC) mode, a polymer dispersed liquid crystal (PDLC) mode, and a phase change guest host (PCGH) mode.

(Polarizers)

The polarizers 51a and 51b are respectively provided on two surfaces of the liquid crystal panel 51 so that the transmission axes thereof are orthogonal to each other, for example. Each of the polarizers 51a and 51b allows only one of orthogonal polarized components of incident light to pass through and blocks the other component by absorption. Each of the polarizers 51a and 51b may be a uniaxially stretched hydrophilic polymer film such as a polyvinyl alcohol film, a partially formalized polyvinyl alcohol film, or an ethylenevinyl acetate copolymer partially saponified film, with a dichroic substance, such as iodine or a dichroic dye, adsorbed to the hydrophilic polymer film. A protective layer such as a triacetyl cellulose (TAC) film is preferably formed on two surfaces of each of the polarizers 51a and 51b. When the protective layer is formed in such a manner, the base 2 of the optical element 1 preferably also serves as the protective layer. This is because, in such a configuration, the anti-reflective polarizer 52 can be thinned.

(Optical Element)

The optical element 1 is the same as one of those in the first to seventh embodiments, and the descriptions thereof are omitted.

According to the eighth embodiment, since the optical element 1 is disposed on the display surface of the liquid crystal display device, the anti-reflection function of the display surface of the liquid crystal display device can be improved. Thus, the visibility of the liquid crystal display device can be improved.

<Ninth Embodiment>

[Configuration of Liquid Crystal Display Device]

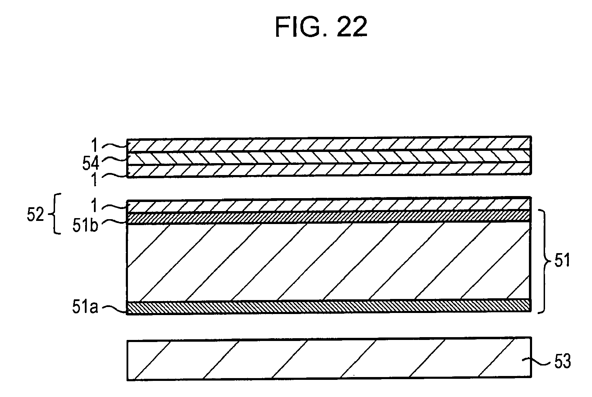

Fig. 22 shows an example of a configuration of a liquid crystal display device according to a ninth embodiment of the present invention. The liquid crystal display device differs from that of the eighth embodiment in that the liquid crystal display device includes a front member 54 on the front side of the liquid crystal panel 51 and also includes the optical element 1 on at least one of the front surface of the liquid crystal panel 51 and the front and rear surfaces of the front member 54. Fig. 22 shows an example in which the optical element 1 is provided to all the front surface of the liquid crystal panel 51 and the front and rear surfaces of the front member 54. For example, an airspace is formed between the liquid crystal panel 51 and the front member 54. The same parts as those in the eighth embodiment are designated by the same reference numerals, and the descriptions thereof are omitted. Note that, in the present invention, the front surface is a surface on the display surface side, that is, a surface on the viewer's side, and the rear surface is a surface on the side opposite the display surface.

The front member 54 is a front panel or the like used for the purpose of providing mechanical, thermal, and weather-resistant protections and a design function to the front surface (viewer's side) of the liquid crystal panel 51. The front member 54 has, for example, a sheet shape, a film shape, or a plate shape. Examples of the material of the front member 54 include glass, triacetyl cellulose (TAC), polyester (TPEE), polyethylene terephthalate (PET), polyimide (PI), polyamide (PA), aramid, polyethylene (PE), polyacrylate, polyethersulfone, polysulfone, polypropylene (PP), diacetyl cellulose, polyvinyl chloride, acrylic resin (PMMA), and polycarbonate (PC). However, the material is not particularly limited to these materials and any material having transparency can be used.

According to the ninth embodiment, the visibility of the liquid crystal display device can be improved as in the eighth embodiment.

[Examples]

Hereinafter, the present invention is specifically described based on Examples, but is not limited to only Examples.

Examples of the present invention are described in the following order.

1. Investigation about the refractive index profile and the shape of structures
2. Investigation about other shapes of structures
3. Investigation about the number of steps in refractive index profile
4. Investigation about reflection characteristics using actually manufactured samples

<1. Investigation about the refractive index profile and the shape of structures>

An S-shaped refractive index profile was assumed, and the shape of structures that achieves the refractive index profile was determined through simulation. Furthermore, the relationship between the refractive index profile and reflectivity was investigated through simulation.

<Example 1>

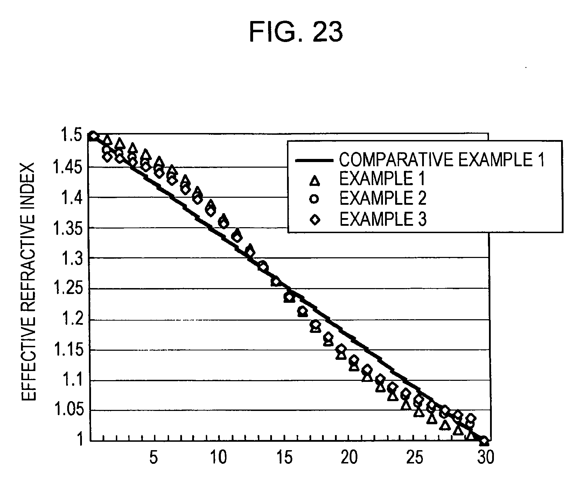

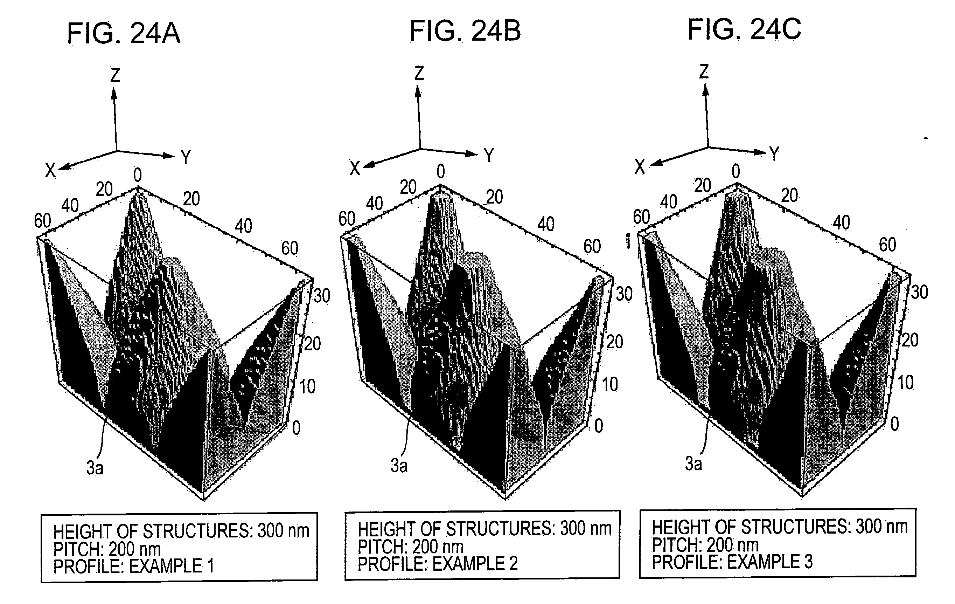

As shown in Fig. 23, a refractive index profile whose effective refractive index draws an S-shaped curved line was assumed. Subsequently, the shape of structures that achieves the above-described refractive index profile was determined. Fig. 24A shows the result.

<Example 2>

As shown in Fig. 23, a refractive index profile whose effective refractive index draws an S-shape and in which the tip changes more steeply than that of Example 1 was assumed. Subsequently, the shape of structures that achieves the above-described refractive index profile was determined. Fig. 24B shows the result.

<Example 3>

As shown in Fig. 23, a refractive index profile whose effective refractive index draws an S-shape and in which the tip changes much more steeply than that of Example 1 was assumed. Subsequently, the shape of structures that achieves the above-described refractive index profile was determined. Fig. 24C shows the result.

<Comparative Example 1>

As shown in Fig. 23, a linear refractive index profile was assumed. Subsequently, the shape of structures that achieves the above-described refractive index profile was determined. As a result, structures having a hanging bell shape (not shown) were obtained.

(Evaluation of reflectivity 1)

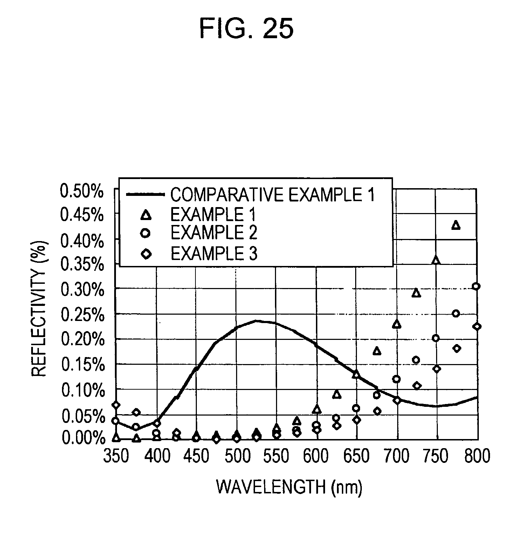

First, the reflectivity of each of the above-described refractive index profiles in the case where the height of structures was 300 nm was determined. Fig. 25 shows the results. Note that, in Fig. 23, since the optical thickness is determined on the basis of the bottom surface of the structures, the relationship between increase and decrease in the refractive index profile is opposite to that shown in Fig. 2.

The following is clear from Fig. 25.

In the linear refractive index profile (Comparative Example 1), the reflectivity R is more than 0.1% in substantially the entire visible range of 400 nm to 700 nm. In contrast, in the S-shaped refractive index profiles (Examples 1 to 3), the reflectivity R is less than 0.1% in substantially the entire visible range of 400 nm to 700 nm. In particular, the S-shaped refractive index profiles (Examples 2 and 3) that steeply change at the ends on the base side and the air side are satisfactory in terms of reflectivity prevention effects in the visible range.

(Evaluation of reflectivity 2)

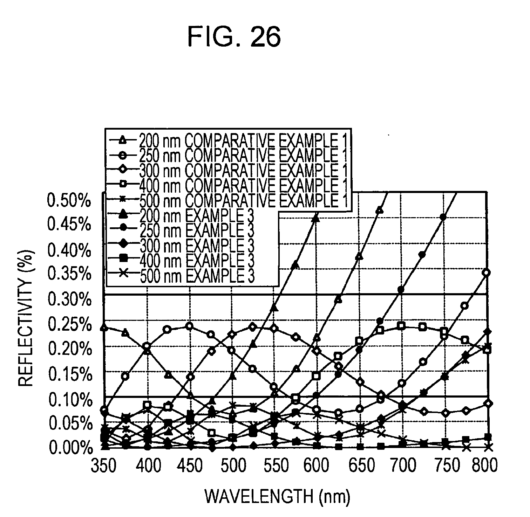

Regarding the linear refractive index profile (Comparative Example 1) and the refractive index profile (Example 3) having the best characteristics in Examples 1 to 3, the reflection characteristics obtained when the height of structures was changed were determined. Fig. 26 shows the results.

The following is clear from Fig. 26.

When the height of structures is 200 nm, the reflectivity of the S-shaped refractive index profile (Example 3) is higher than that of the linear refractive index profile (Comparative Example 1). Therefore, the reflection characteristics of the S-shaped refractive index profile are degraded.

When the height of structures is 250 nm, the reflectivity of the S-shaped refractive index profile (Example 3) is decreased at shorter wavelengths, and the average value of the reflectivity in the visible range of 400 nm to 700 nm is improved compared with the linear refractive index profile (Comparative Example 1). Therefore, when the height of structures is 5/14 (250 nm) or more of the wavelength 700 nm, the S-shaped refractive index profile effectively functions and the reflectivity R < 0.3% can be achieved in substantially the entire visible range of 400 nm to 700 nm. Furthermore, in a wavelength range of 400 nm to 550 nm, when the height of structures is 5/14 (below 200 nm) or more of the wavelength 550 nm, the reflectivity R < 0.3% can be achieved.

When the height of structures is 300 nm, 400 nm, or 500 nm, the reflectivity of the S-shaped refractive index profile (Example 3) is decreased in the visible range of 400 nm to 700 nm compared with the reflectivity of the linear refractive index profile. Therefore, the reflection characteristics of the S-shaped refractive index profile are improved. Specifically, better anti-reflection effects (R < 0.1%) can be produced in the visible range of 400 nm to 700 nm.

When the height of structures is 300 nm, the reflectivity at 700 nm, which is the longer wavelength edge of the wavelength range, is about 0.08%. Thus, when the height of structures is 2/5 (280 nm) or more and preferably 3/7 (300 nm) or more of the wavelength 700 nm, the S-shaped refractive index profile effectively functions and the reflectivity R < 0.1% can be achieved in substantially the entire visible range of 400 nm to 700 nm.

In terms of ease of manufacturing, the maximum value of the height of structures is preferably about 1.0 μm (at a pitch of 700 nm, the aspect is 1.4) in the visible range. Thus, the height of structures is preferably 10/7 (1 μm) or less of the wavelength 700 nm.

In consideration of the above description, the height of structures is preferably 5/14 or more and 10/7 or less the maximum value of the wavelength range of light in a use environment, more preferably 2/5 or more and 10/7 or less the maximum value, and further preferably 3/7 or more and 10/7 or less the maximum value.

(Evaluation of shape of structures)

The following is clear from Figs. 24A to 24C and 25.

The shape of structures that achieves the refractive index profile shown in Fig. 23 is a sectional shape of the square root of the S-shaped refractive index profile, and the shape gradually widens toward the base. In addition, among the structures shown in Figs. 24A to 24C, the structures having a truncated cone-like shape whose top is flat (Example 2: Fig. 24B and Example 3: Fig. 24C) can achieve particularly good anti-reflection characteristics.

Furthermore, as shown in Fig. 24, the lower portions of the adjacent structures are connected to one another, which is indicated by the presence of flat portions 3a formed in the lower portions of the structures. This can achieve a refractive index profile that gradually increases toward the base and draws an S-shaped curved line. Note that minute structures such as secondary structures may be formed on the surface of the base without bringing the lower portions of structures into contact with one another.

<2. Investigation about other shapes of structures>

The shapes of the structures other than those shown in Figs. 24A to 24C were determined by calculation.

<Example 4>

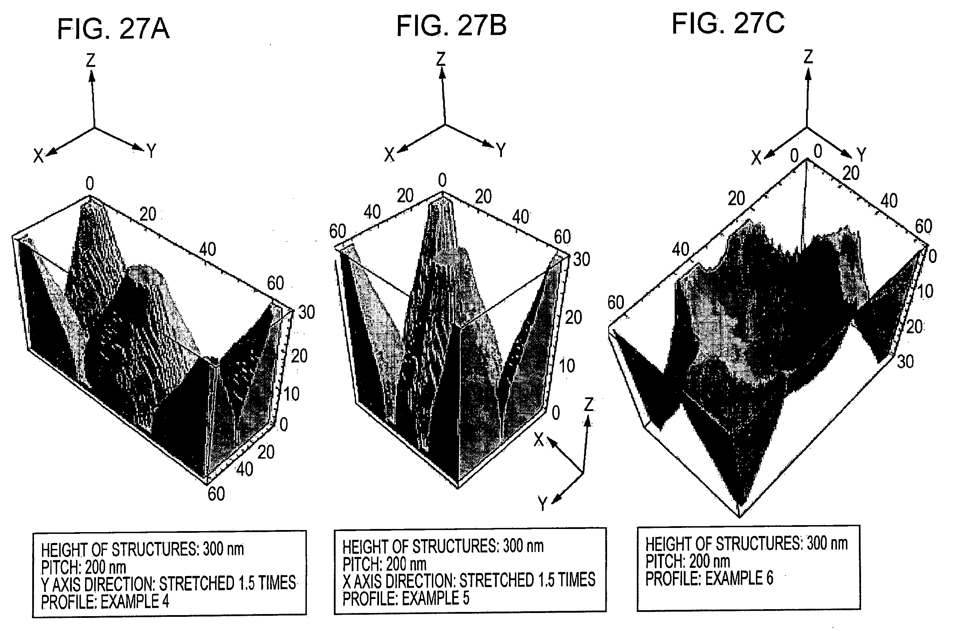

Structures obtained by stretching the structures 3 of Example 3 1.5 times in the Y axis direction were determined. Fig. 27A shows the result.

<Example 5>

Structures obtained by stretching the structures 3 of Example 3 1.5 times in the X axis direction were determined. Fig. 27B shows the result.

<Example 6>

The shape of structures obtained by reversing the depressions and projections of the structures 3 of Example 2 was determined. Fig. 27C shows the result.

(Evaluation of shape of structures)

Even in the structures stretched in the X and Y axis directions or the structures whose depressions and projections are reversed, a refractive index profile similar to those of Examples 2 and 3 is obtained. Therefore, the shapes (Examples 4 to 6) of the structures shown in Figs. 27A to 27C also achieve good anti-reflection characteristics.
Moreover, the structures stretched in the X and Y axis directions as in Examples 4 and 5 can be easily manufactured, and the packing fraction can be increased.

<3. Investigation about the number of steps in refractive index profile>

The reflection spectra of a refractive index profile having two or more inflection points and a refractive index profile having a single inflection point (S-shaped refractive index profile) were determined, and the results were compared with each other.

<Example 7>

The same S-shaped refractive index profile as that of Example 3, that is, a refractive index profile having a single inflection point was assumed.

<Comparative Example 2>

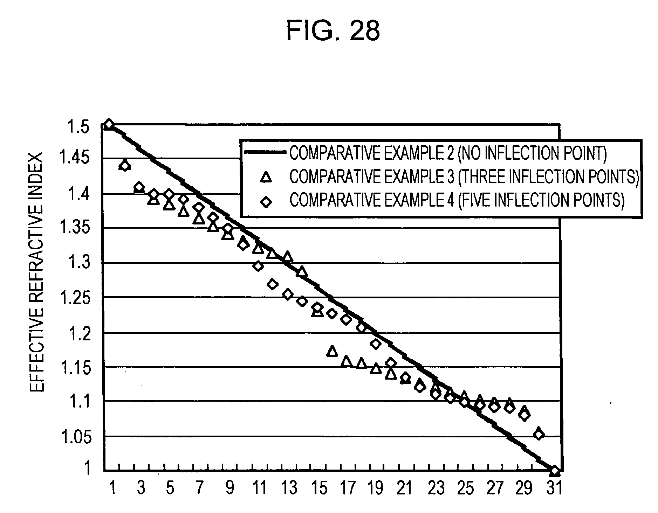

As shown in Fig. 28, the same refractive index profile as that of Comparative Example 1, that is, a linear refractive index profile was assumed.

<Comparative Example 3>

As shown in Fig. 28, a refractive index profile having three inflection points was assumed.

<Comparative Example 4>

As shown in Fig. 28, a refractive index profile having five inflection points was assumed.

(Evaluation of reflectivity)

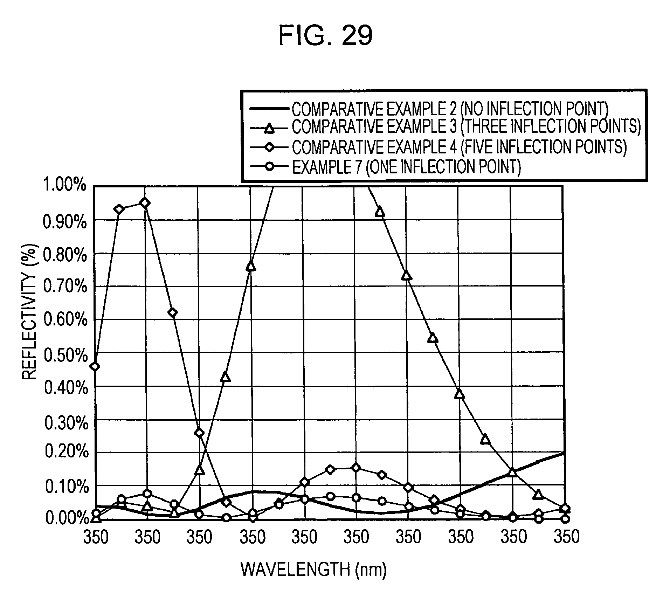

The reflectivity of each of the above-described refractive index profiles in the case where the height of structures was 500 nm was determined. Fig. 29 shows the results. Note that, in Fig. 28, since the optical thickness is determined on the basis of the bottom surface of the structures, the relationship between increase and decrease in the refractive index profile is opposite to that shown in Fig. 2.
The following is clear from Fig. 29.
When the height of structures is 500 nm, the S-shaped refractive index profile (Example 7) produces better anti-reflection effects than the refractive index profiles having two or more inflection points (Comparative Examples 3 and 4) and the linear refractive index profile (Comparative Example 2).
Herein, when the height of structures is 500 nm or more, the S-shaped refractive index profile (Example 7) tends to produce better anti-reflection effects than the refractive index profiles having two or more inflection points (Comparative Examples 3 and 4) and the linear refractive index profile (Comparative Example 2).

<4. Investigation about reflection characteristics using actually manufactured samples>

In Example 8 below, the height H of structures of an optical sheet, the arrangement pitches P1 and P2, and the aspect ratio were determined as follows.
First, the surface shape of an optical sheet manufactured was observed with an atomic force microscope (AFM). Subsequently, the height H and arrangement pitches P1 and P2 of structures were determined from the sectional profile obtained with the AFM. Furthermore, the aspect ratio (= Height H/Arrangement pitch P2) was determined using the height H and the arrangement pitch P2.

(Example 8)

First, a glass roll master having an outer diameter of 126 mm was prepared, and a resist layer was formed on the surface of the glass roll master as follows. That is to say, a photoresist was diluted with a thinner by a factor of 1/10, and the diluted resist was applied on the columnar surface of the glass roll master by dipping so as to have a thickness of about 70 nm, whereby the resist layer was formed. Next, the glass roll master serving as a recording medium was transferred to the roll master exposure apparatus shown in Fig. 8. By exposing the resist layer, a latent image having a quasi-hexagonal lattice pattern in the three adjacent rows of tracks was patterned on the resist layer so as to form a single spiral shape.

Specifically, a region where a quasi-hexagonal lattice exposure pattern was to be formed was irradiated with laser beams having a power of 0.50 mW/m that reach the surface of the glass roll master to form a depressed quasi-hexagonal lattice exposure pattern. Note that the thickness of the resist layer in the column direction of track rows was about 60 nm and the thickness of the resist layer in the track extending direction was about 50 nm.

Subsequently, by subjecting the resist layer on the glass roll master to development treatment, an exposed portion of the resist layer was dissolved to perform development. Specifically, an undeveloped glass roll master was placed on a turntable of a developing apparatus (not shown). A developer was dropwise applied onto the surface of the glass roll master while the glass roll master was rotated together with the turntable, to develop the resist layer on the surface. Thus, a resist glass roll master whose resist layer has openings in a quasi-hexagonal lattice pattern was obtained.

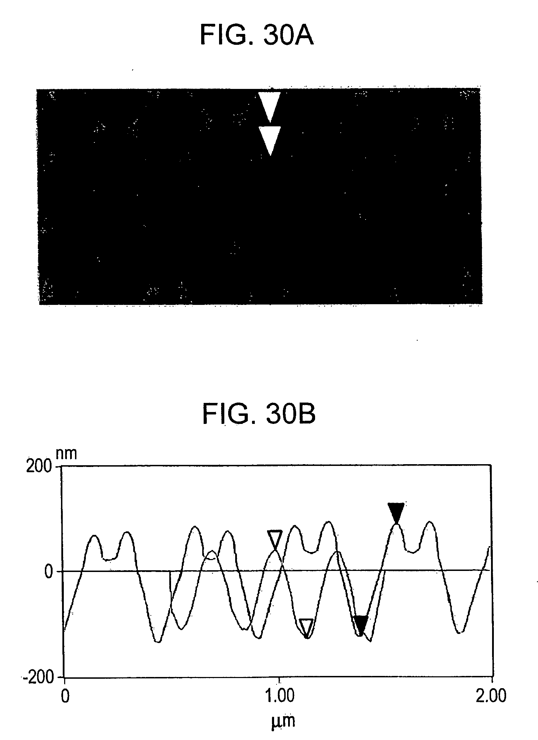

Next, etching treatment and ashing treatment were alternately performed on the resist glass roll master using a roll etching machine. Thus, a pattern of conical structures (depressions) was formed. Herein, by suitably adjusting the treatment time of the etching treatment and ashing treatment, a single step was formed on the side face of the structures. This provided a shape whose effective refractive index in the depth direction of the structures gradually increases toward a base and changes so as to draw an S-shaped curved line. Figs. 30A and 30B show the shape of the formed surface of a master manufactured. Such a shape of structures can also be measured by observation with a SEM (scanning electron microscope) or the like, instead of the evaluation with the AFM (scanning atomic force microscope).

Herein, the roll etching machine is a plasma etching apparatus having a columnar electrode, and is configured such that the columnar electrode is inserted into the hollow of the cylindrical glass roll master and plasma etching is performed on the cylindrical surface of the glass roll master.

Finally, by completely removing the resist layer by $O_2$ ashing, a moth-eye glass roll master having a depressed quasi-hexagonal lattice pattern was obtained. The depth of the depressions in the column direction was larger than those in the track extending direction.

Subsequently, the moth-eye glass roll master was brought into close contact with a TAC (triacetyl cellulose) sheet to which an ultraviolet curable resin had been applied, and then they were detached from each other while being cured by applying ultraviolet rays. Consequently, an optical sheet having a principal surface on which a plurality of structures were arranged was obtained. The height H of the structures of the optical sheet was 230 nm, the arrangement pitch P1 was 300 nm, the arrangement pitch P2 was 270, and the aspect ratio (H/P2) was 0.9.

Through the processes above, an intended optical sheet was manufactured.

(Evaluation of reflectivity)

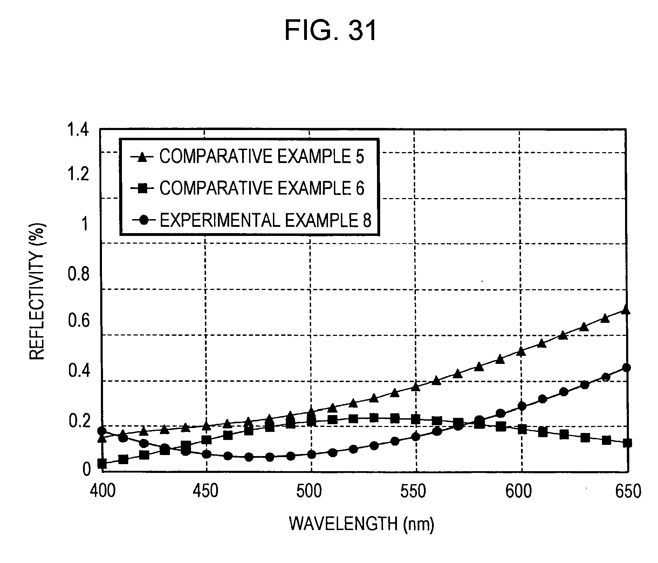

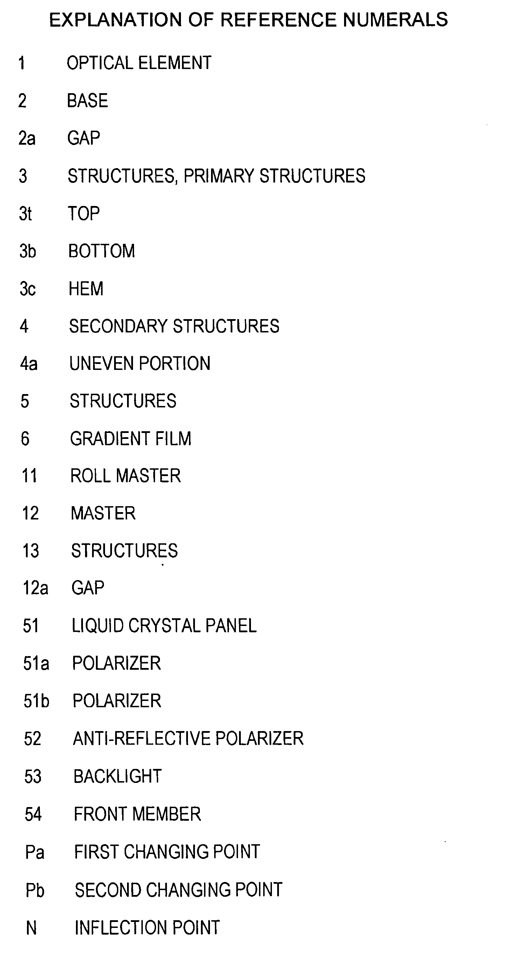

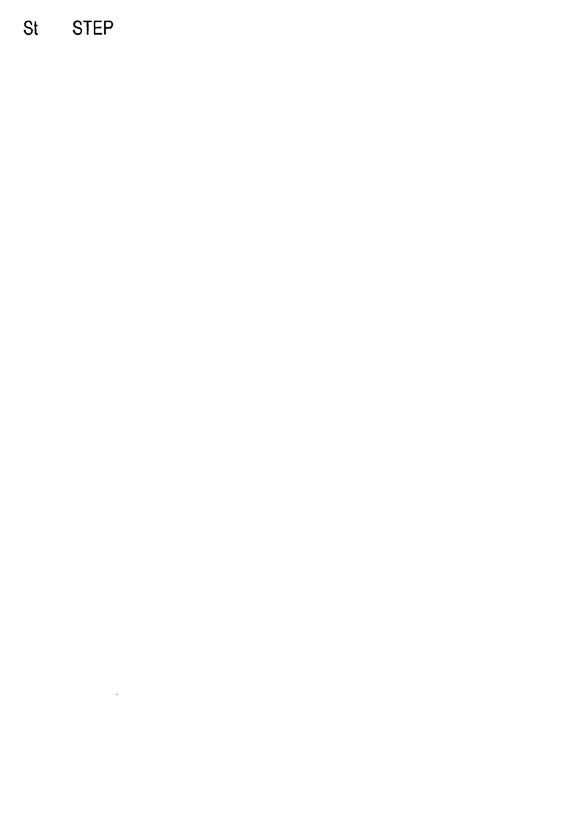

The reflectivity of the optical sheet manufactured as described above was evaluated using an evaluation apparatus (V-550) available from JASCO Corporation. Fig. 31 shows the results.

(Comparative Example 5)

The reflection characteristics of an optical sheet having a surface on which a plurality of structures having a cone-like shape had been arranged were determined through simulation. Fig. 31 shows the result.

The conditions of the simulation are shown below.
Arrangement: hexagonal lattice
Height H: 200 nm
Arrangement pitches P1 and P2: 300 nm
Aspect ratio (H/P2): 0.7
Shape: cone-like shape (shape without an S-shaped refractive index profile)
Polarization: none

(Comparative Example 6)

The reflection characteristics of an optical sheet having a surface on which a plurality of structures having a hanging bell shape had been arranged were determined through simulation. Fig. 31 shows the result.

The conditions of the simulation are shown below.
Arrangement: hexagonal lattice
Height H: 300 nm
Arrangement pitches P1 and P2: 300 nm
Aspect ratio (H/P2): 1.0
Shape: hanging bell shape (shape without an S-shaped refractive index profile)
Polarization: none

Table 1 shows the configurations of Example 8 and Comparative Examples 5 and 6.

|  | Example 8 | Comparative Example 5 | Comparative Example 6 |
|---|---|---|---|
| Result of surface observation | Fig. 30A Fig. 30B (AFM image) | - | - |
| Lattice pattern | quasi-hexagonal lattice | hexagonal lattice | hexagonal lattice |
| Shape of bottom | ellipse | circle | circle |
| Pitch P1 (nm) | 300 | 300 | 300 |
| Pitch P2 (nm) | 270 | 300 | 300 |
| Height H (nm) | 230 | 200 | 300 |
| Aspect ratio (H/P2) | 0.9 | 0.7 | 1.0 |
| Shape | S-shape (refractive index profile) | cone-like shape | hanging bell shape |
| Polarization | none | none | none |

The following is clear from Fig. 31.

In Example 8, the reflectivity tends to slightly increase at longer wavelengths in the wavelength range of 400 nm to 650 nm, but is much lower than that of Comparative Example 5 in the wavelength range of about 400 nm to 650 nm. Specifically, the low-reflection characteristics such as a reflectivity of 0.2% or less are achieved at a wavelength of 550 nm, at which the visibility of human beings is the highest. Note that the increase in reflectivity at longer wavelengths is caused by the height of structures. Therefore, the increase in reflectivity can be suppressed by changing the height of structures in Example 8 to about 300 nm, which is the height of structures in Comparative Example 6.

In contrast, in Comparative Example 5, the reflectivity tends to gradually increase along with an increase in wavelength in the wavelength range of 400 nm to 650 nm. Furthermore, in Comparative Example 6, an increase in reflectivity is suppressed at longer wavelengths in the wavelength range of 400 nm to 650 nm, but the anti-reflection characteristics of Example 8 are better than those of Comparative Example 6 in the entire above-described wavelength range. In particular, Example 8 is better than Comparative Example 6 in terms of anti-reflection characteristics at a wavelength of 550 nm, at which the visibility of human beings is the highest. Herein, when the height of structures in Example 8 is changed to about 300 nm, which is the height of structures in Comparative Example 6, the structures having an S-shaped refractive index profile have considerably better anti-reflection characteristics.

It is clear from the above description that good anti-reflection characteristics can be achieved when an effective refractive index in the depth direction of structures gradually increases toward a base and draws an S-shaped curved line.

The embodiments and Examples of the present invention have been specifically described above. However, the present invention is not limited to the above-described embodiments and Examples, and various modifications can be made in accordance with different desired performances on the basis of the technical ideas of the present invention.

For example, the numerical values, shapes, materials, and configurations exemplified in the embodiments and Examples are mere examples, and different numerical values, shapes, materials, and configurations may be optionally used.

Furthermore, the configurations of the above-described embodiments can be combined with each other as long as they do not depart from the spirit of the present invention.

Furthermore, in the above-described embodiments, the case where the present invention is applied to a liquid crystal display device has been described as an example, but the present invention can also be applied to various display devices other than the liquid crystal display device. For example, the present invention can be applied to various display devices such as a CRT (cathode ray tube) display, a plasma display panel (PDP), an electro luminescence (EL) display, and a surface-conduction electron-emitter display (SED).

Furthermore, in the above-described embodiments, the case where the optical element 1 is manufactured by a method in which a process for making a master of optical discs is combined with an etching process has been described as an example. However, the method for manufacturing the optical element 1 is not limited thereto, and any method may be adopted as long as an optical element having an S-shaped refractive index profile whose effective refractive index in the depth direction gradually increases toward a base can be manufactured. For example, the optical element may be manufactured using electron-beam exposure or the like. Alternatively, the optical element may be manufactured by performing coating with a gradient film obtained by blending hollow silica or the like while the ratio of the hollow silica is changed such that the effective refractive index gradually changes, or with a gradient film obtained through reactive sputtering.

Furthermore, in the above-described embodiments, a low refractive index layer may be further formed on the surface of the base 2 where the structures 3 have been formed. Preferably, the low refractive index layer is mainly composed of a material having a lower refractive index than the materials constituting the base 2, the structures 3, and the secondary structures 4. Examples of the material of such a low refractive index layer include organic materials such as fluorocarbon resins and inorganic low refractive index materials such as LiF and $MgF_2$.

Furthermore, in the above-described embodiments, the optical element may be manufactured by thermal transfer. Specifically, the optical element 1 may be manufactured by heating a base mainly composed of a thermoplastic resin and then by pressing a stamp (mold) such as the roll master 11 or the disc master 41 against the base sufficiently softened by the heat treatment.

Furthermore, in the above-described embodiments, the case where an anti-reflective polarizer is provided by applying the present invention to a polarizer has been described as an example, but the present invention is not limited to the example. Anti-reflective optical components other than the polarizer can be provided by applying the present invention to a lens, an optical waveguide, a window material, a display element, and the like.

Furthermore, in the above-described embodiments, the case where the refractive index profile has an S-shape with a single inflection point has been described, but another inflection point may be further provided to at least one of ends of the S-shaped refractive index profile. Even in such a substantially S-shaped refractive index profile, good anti-reflection characteristics can be achieved. In particular, when the height of structures is small, the effects of anti-reflection characteristics are significantly produced. The inflection point at one end of the refractive index profile can be obtained by, for example, forming the top of the structures 3 so that the top is a protrusion with a curved surface. The inflection point at the other end can be obtained by, for example, forming a hem in the lower portion of the structures 3 so that the hem widens toward the base.

**Claims**

1. An anti-reflective optical element comprising:

   a base; and
   a large number of structures arranged on a surface of the base,
   wherein the structures are depressions or projections with a conical form,
   the structures are arranged at a pitch shorter than or equal to a wavelength range of light in a use environment and lower portions of the structures adjacent to one another are connected to one another, and
   an effective refractive index in a depth direction of the structures gradually increases toward the base and draws an S-shaped curved line.

2. The optical element according to Claim 1, wherein the structures have an elliptic cone-like shape,
   the effective refractive index in the depth direction of the structures has a single inflection point, and
   the inflection point corresponds to a shape of a side face of the structures.

3. The optical element according to Claim 1, wherein the structures have a single step on a side face of the structures.

4. The optical element according to Claim 1, wherein a side face of the structures gradually widens toward the base and changes so as to draw a shape of a square root of the S-shaped curved line.

5. The optical element according to Claim 1, wherein the wavelength range of light in a use environment is a wavelength range of visible light.

6. The optical element according to Claim 1, wherein the height of the structures is 5/14 or more the maximum value of the wavelength range of light in a use environment.

7. The optical element according to Claim 1, wherein the height of the structures is 2/5 or more the maximum value of the wavelength range of light in a use environment.

8. The optical element according to Claim 1, wherein a change in the effective refractive index in the depth direction of the structures is greater on at least one of the incidence side and base side of the structures than an average of a slope of the effective refractive index.

9. The optical element according to Claim 1, wherein the lower portions of the structures adjacent to one another are connected to one another so as to overlap one another.

10. The optical element according to Claim 1, further comprising secondary structures disposed between the structures adjacent to one another,
wherein the secondary structures are depressions or projections smaller than the structures, and
the lower portions of the structures are connected to one another with the secondary structures therebetween.

11. The optical element according to Claim 1, wherein the most adjacent structures among the structures are arranged in a track direction.

12. The optical element according to Claim 1, wherein the structures have a conical form that is axially symmetrical except for the lower portion connected to the adjacent structures or a conical form obtained by stretching or shrinking the conical form in a track direction.

13. The optical element according to Claim 1, wherein the structures are periodically arranged in a tetragonal lattice pattern or in a quasi-tetragonal lattice pattern.

14. The optical element according to Claim 1, wherein the structures are periodically arranged in a hexagonal lattice pattern or in a quasi-hexagonal lattice pattern.

15. An optical element comprising:

a base; and
a large number of structures arranged on a surface of the base,
wherein the structures are pillar-shaped depressions or projections that extend in a single direction on the surface of the base,
the structures are arranged at a pitch shorter than or equal to a wavelength range of light in a use environment and lower portions of the structures adjacent to one another are connected to one another, and
an effective refractive index in a depth direction of the structures gradually increases toward the base and draws an S-shaped curved line.

16. A display device comprising the optical element according to any one of Claims 1 to 15.

17. An anti-reflective optical component comprising:

an optical component; and
a large number of structures arranged on a surface of the optical component,
wherein the structures are depressions or projections with a conical form,
the structures are arranged at a pitch shorter than or equal to a wavelength of light in a use environment and lower portions of the structures adjacent to one another are connected to one another, and
an effective refractive index in a depth direction of the structures gradually increases toward the base and draws an S-shaped curved line.

18. The anti-reflective optical component according to Claim 17, wherein the optical component is one of a polarizing element, a lens, an optical waveguide, a window material, and a display element.

19. A master comprising:

a base; and
a large number of structures arranged on a surface of the base,
wherein the structures are depressions or projections with a conical form,
the structures are arranged at a pitch shorter than or equal to a wavelength of light in a use environment and lower portions of the structures adjacent to one another are connected to one another, and
an effective refractive index in a depth direction of an optical element shaped using the structures gradually increases toward a base of the optical element and draws an S-shaped curved line.

20. The master according to Claim 19, wherein the base has a disc-like shape, a cylindrical shape, or a columnar shape.

FIG. 1A

FIG. 1B

FIG. 1C

FIG. 1D

# FIG. 2

FIG. 3

# FIG. 4A

# FIG. 4B

FIG. 5

FIG. 6A   FIG. 6B   FIG. 6C

FIG. 7A

FIG. 7B

## FIG. 8

FIG. 9A

FIG. 9B

FIG. 9C

FIG. 10A

14

12

14

FIG. 10B

11

13

12

FIG. 10C

1

3

2

FIG. 11A

FIG. 11B

FIG. 11C

FIG. 11D

FIG. 12A

FIG. 12B

# FIG. 13

EP 2 372 403 A1

FIG. 14A

FIG. 14B

FIG. 14C

FIG. 14D

FIG. 15A

FIG. 15B

FIG. 15C

FIG. 15D

FIG. 16

FIG. 17A

FIG. 17B

FIG. 17C

FIG. 17D

FIG. 18

FIG. 19

EP 2 372 403 A1

FIG. 20

EP 2 372 403 A1

## FIG. 21

FIG. 22

# FIG. 23

# FIG. 24A

HEIGHT OF STRUCTURES: 300 nm
PITCH: 200 nm
PROFILE: EXAMPLE 1

# FIG. 24B

HEIGHT OF STRUCTURES: 300 nm
PITCH: 200 nm
PROFILE: EXAMPLE 2

# FIG. 24C

HEIGHT OF STRUCTURES: 300 nm
PITCH: 200 nm
PROFILE: EXAMPLE 3

# FIG. 25

## FIG. 26

FIG. 27A

FIG. 27B

FIG. 27C

HEIGHT OF STRUCTURES: 300 nm
PITCH: 200 nm
Y AXIS DIRECTION: STRETCHED 1.5 TIMES
PROFILE: EXAMPLE 4

HEIGHT OF STRUCTURES: 300 nm
PITCH: 200 nm
X AXIS DIRECTION: STRETCHED 1.5 TIMES
PROFILE: EXAMPLE 5

HEIGHT OF STRUCTURES: 300 nm
PITCH: 200 nm
PROFILE: EXAMPLE 6

EP 2 372 403 A1

# FIG. 28

# FIG. 29

# FIG. 30A

# FIG. 30B

# FIG. 31

# EXPLANATION OF REFERENCE NUMERALS

1     OPTICAL ELEMENT

2     BASE

2a    GAP

3     STRUCTURES, PRIMARY STRUCTURES

3t    TOP

3b    BOTTOM

3c    HEM

4     SECONDARY STRUCTURES

4a    UNEVEN PORTION

5     STRUCTURES

6     GRADIENT FILM

11    ROLL MASTER

12    MASTER

13    STRUCTURES

12a   GAP

51    LIQUID CRYSTAL PANEL

51a   POLARIZER

51b   POLARIZER

52    ANTI-REFLECTIVE POLARIZER

53    BACKLIGHT

54    FRONT MEMBER

Pa   FIRST CHANGING POINT

Pb   SECOND CHANGING POINT

N    INFLECTION POINT

St    STEP

**INTERNATIONAL SEARCH REPORT**

| International application No. |
| --- |
| PCT/JP2009/071521 |

A. CLASSIFICATION OF SUBJECT MATTER
*G02B1/11*(2006.01)i, *G02F1/1335*(2006.01)i

According to International Patent Classification (IPC) or to both national classification and IPC

B. FIELDS SEARCHED

Minimum documentation searched (classification system followed by classification symbols)
G02B1/11, G02F1/1335

Documentation searched other than minimum documentation to the extent that such documents are included in the fields searched
Jitsuyo Shinan Koho        1922-1996    Jitsuyo Shinan Toroku Koho    1996-2010
Kokai Jitsuyo Shinan Koho   1971-2010    Toroku Jitsuyo Shinan Koho    1994-2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br><br>Y | JP 2003-240904 A  (Dainippon Printing Co., Ltd.),<br>27 August 2003 (27.08.2003),<br>claim 1; paragraphs [0041], [0043], [0051], [0052], [0055], [0079], [0082], [0085]; fig. 1, 2, 4, 5, 7<br>& US 2005/0074579 A1 | 1-2,4-8, 11-12,15-19<br>9-10,13-14, 20 |
| Y | JP 2000-121802 A  (Alps Electric Co., Ltd.),<br>28 April 2000 (28.04.2000),<br>claim 1; paragraph [0014]; fig. 1, 2<br>(Family: none) | 9,16,20 |
| Y | JP 2008-090212 A  (Nissan Motor Co., Ltd.),<br>17 April 2008 (17.04.2008),<br>claim 1<br>(Family: none) | 10,16 |

| ☒ Further documents are listed in the continuation of Box C. | ☐ See patent family annex. |
| --- | --- |

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |

| Date of the actual completion of the international search<br>10 March, 2010 (10.03.10) | Date of mailing of the international search report<br>23 March, 2010 (23.03.10) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2009/071521

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2008-304637 A  (Sony Corp.),<br>18 December 2008 (18.12.2008),<br>claim 1<br>& US 2008/0304155 A1    & CN 101320104 A<br>& KR 10-2008-0107276 A | 13,16 |
| Y | JP 2008-158013 A  (Sony Corp.),<br>10 July 2008 (10.07.2008),<br>claim 3<br>(Family: none) | 14,16 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 08023816 A

### Non-patent literature cited in the description

- *Optical and Electro-Optical Engineering Contact,* 2005, vol. 43 (11), 630-637
- Master Mold for Forming Anti-reflection (Moth-eye) Structures having no wavelength dependence. NTT Advanced Technology Corporation, 01 September 2008
- Development of Desktop Device Enabling Nanometer-scale Microfabrication. National Institute of Advanced Industrial Science and Technology, 01 September 2008